# EUROPEAN PATENT APPLICATION

(11) **EP 3 993 552 A1**
(43) Date of publication of application: **04.05.2022**
(21) Application number: 20882132.2
(22) Date of filing: 21.10.2020
(51) Int. Cl.: H04W 76/00, H04W 76/11, H04W 80/10

(54) **WIRELESS TERMINAL AND METHOD THEREFOR**

(30) Priority: 31.10.2019 JP 2019199274
(71) Applicant: NEC Corporation, 108-8001 Tokyo (JP)
(72) Inventor: TAMURA Toshiyuki, Tokyo 108-8001 (JP); OKABE Junya, Tokyo 108-0073 (JP)
(74) Representative: MacDougall, Alan John Shaw
(86) International application number: PCT/JP2020/039498
(87) International publication number: WO 2021/085259

(57) **Abstract**

A radio terminal (1) is configured to assign a Protocol Data Unit (PDU) Session ID that is different from a most recently used PDU Session ID to a new PDU session to be established. This contributes to, for example, avoiding a conflict (or collision) between an uncompleted PDU session release and a new PDU session establishment that are associated with the same PDU Session ID.

## Description

### Technical Field

The present disclosure relates to a cellular network and, in particular, to release and establishment of a connectivity service between UE and an external data network.

### Background Art

The 5G system (5GS) connects user equipment (UE) to an external data network (Data Network (DN)). In the 5G architecture, connectivity services between the UE and the DN are supported by Protocol Data Unit (PDU) sessions. A PDU session is an association between the UE and the DN and is used to provide a PDU connectivity service (i.e., exchange of PDUs between the UE and the DN). A PDU session is established between the UE and a User Plane Function (UPF) (i.e., PDU session anchor) to which the DN is connected. In terms of data transfer, a PDU session consists of a tunnel (N9 tunnel) in the 5G core network (5GC), a tunnel (N3 tunnel) between the 5GC and an Access Network (AN), and one or more radio bearers.

PDU sessions are managed by a Session Management Function (SMF). The SMF sends and receives SM signalling messages (NAS-SM messages, N1 SM messages) to and from the Non-Access Stratum (NAS)-SM layer of a UE via a network function (NF) service (i.e., communication service with a UE) provided by an Access and Mobility Management Function (AMF).

The AMF terminates a single signalling connection (i.e., N1 NAS signalling connection) with a UE. The Single N1 NAS signalling connection is used for both Registration and Connection Managements (RM/CM) for the UE, and SM-related messages and procedures.

A PDU session is established in response to a request from a UE or a network. A PDU Session ID is used to specify a PDU session. A PDU Session ID is an identifier that is generated by a UE and is unique among PDU Sessions that this UE deals with. A PDU Session ID assigned to a PDU session to be newly generated shall not be the same as any of the IDs of existing PDU sessions. The term "PDU Session ID" used herein may indicate the value of a PDU Session ID generated for a PDU session.

Non-Patent Literature 1 (3GPP TS 23.502) and Non-Patent Literature 2 (3GPP TS 24.501) specify a PDU session establishment procedure and a PDU Session release procedure. More specifically, the PDU session establishment procedure is described, for example, in clause 4.3.2.2 of Non-Patent Literature 1 and clause 6.4.1 of Non-Patent Literature 2. The PDU Session release procedure is described, for example, in clause 4.3.4.2 of Non-Patent Literature 1 and clauses 6.3.3 and 6.4.3 of Non-Patent Literature 2.

### Citation List

### Non Patent Literature

[Non-Patent Literature 1] 3GPP TS 23.502 V16.2.0 (2019-09) "3rd Generation Partnership Project; Technical Specification Group Services and System Aspects; Procedures for the 5G System (5GS); Stage 2 (Release 16)", September 2019
[Non-Patent Literature 2] 3GPP TS 24.501 V16.2.0 (2019-09) "3rd Generation Partnership Project; Technical Specification Group Core Network and Terminals; Non-Access-Stratum (NAS) protocol for 5G System (5GS); Stage 3 (Release 16)", September 2019

### Summary of Invention

### Technical Problem

According to the UE-initiated PDU Session release procedure disclosed in clause 4.3.4.2 of Non-Patent Literature 1, the UE receives a NAS message containing a PDU Session Release Command from the AMF. The PDU Session Release Command is SM signalling (N1 SM message) sent from the SMF to the UE via the AMF in order to instruct the UE to release the PDU session. Then, the UE sends a NAS message containing PDU Session Release Complete to the AMF in order to acknowledge the PDU Session Release Command. This NAS message contains the PDU Session ID of the PDU session to be released, and an N1 SM container (PDU Session Release Complete). The N1 SM container (PDU Session Release Complete) is transmitted to the SMF via the AMF. The PDU Session Release Complete may instead be called PDU Session Release Ack.

After the above, the SMF performs (or invokes) an Nsmf_PDUSession_SMContextStatusNotify service operation to notify the AMF that the SM context for the PDU session is to be released. The Nsmf_PDUSession_SMContextStatusNotify is one of the NF services provided by the SMF. An Nsmf_PDUSession_SMContextStatusNotify is used by the SMF to notify its consumer (e.g., AMF) of the status of the SM context regarding a PDU session.

The AMF releases a UE context (i.e., PDU session level context) related to the PDU session in response to the Nsmf_PDUSession_SMContextStatusNotify message. The PDU session level context managed by the AMF includes associations among the SMF information (e.g., SMF ID), PDU Session ID, and Data Network Name (DNN).

In addition, the SMF performs (or invokes) an Nudm_UECM_Deregistration service operation, including the Data Network Name (DNN) and PDU Session ID, to release the context regarding the PDU session to be released. The Nudm_UECM_Deregistration is one of the NF services provided by a Unified Data Management (UDM). An NF consumer (e.g., SMF) uses the Nudm_UECM_Deregistration service operation to request the UDM to delete information related to the NF. In response to the request from the SMF, the UDM removes the association between the SMF identity and the associated DNN and PDU Session ID.

That is, according to the UE-initiated PDU Session release procedure disclosed in clause 4.3.4.2 of Non-Patent Literature 1, after the UE sends PDU Session Release Complete (SM signalling) to the SMF via the AMF, the SMF releases the context (resources) in the 5GC regarding this PDU session (or removes this context from the 5GC) while cooperating with the AMF and the UDM.

However, in the existing procedures, the UE may be able to request the 5GC to establish a new PDU session just after sending PDU Session Release Complete (SM signalling). In addition, the UE may be able to use the PDU Session ID associated with a PDU session that has just been released for a new PDU session to be established. This is because, in the UE's point view, it can be considered that PDU Session ID is considered to be no longer associated with any of the existing PDU sessions.

Accordingly, before the PDU session release in the 5GC (i.e., removal of the context regarding the PDU session) is successfully completed, the 5GC may receive a PDU session establishment request from the UE indicating the same PDU Session ID as that of the PDU session to be released. In this case, the 5GC may not be able to correctly distinguish the new PDU session to be established from the PDU session to be released. This is because, PDU Session IDs generated (or determined) by the UE are used in both the management of PDU sessions by the SMF and the management of the UE context (PDU Session level context) related to PDU sessions by the AMF.

For example, an unfavorable scenario including the following steps (1)-(3) may occur. In step (1), a UE-initiated PDU Session release procedure is performed to release an existing PDU session that is managed by SMF #1 and is associated with PDU Session ID #1. In this release procedure, the UE sends a NAS message containing PDU Session ID #1 and an N1 SM container (PDU Session Release Complete) to the AMF.

In step (2), immediately after the transmission of the PDU Session Release Complete, the UE selects PDU Session ID #1 to establish a new PDU session and sends a NAS message for requesting establishment of a new PDU session to the AMF. This NAS message contains PDU Session ID #1, a Request type indicating "initial request" or "initial emergency request", and an N1 SM container (PDU Session Establishment Request). The AMF selects, for example, SMF #2 for a new PDU session and sends an Nsmf_PDUSession_CreateSMContext Request to the SMF #2. This Nsmf_PDUSession_CreateSMContext Request contains PDU Session ID #1 and the N1 SM container (PDU Session Establishment Request). The Nsmf_PDUSession_CreateSMContext service operation is one of the NF services provided by an SMF. The AMF as an NF consumer uses the Nsmf_PDUSession_CreateSMContext to create an AMF-SMF association to support a PDU session.

In step (3), while the procedure for establishing a new PDU session related to Step (2) is taking place, SMF #1 sends an Nsmf_PDUSession_SMContextStatusNotify message to the AMF indicating that the SM context for the existing PDU session is to be released. In this case, because the PDU Session ID of the new PDU session is the same as that of the PDU session to be released, for example, the AMF may accidentally remove the UE context (PDU Session level context) created for the new PDU session.

As described above, in the existing PDU session establishment and PDU Session release procedures, a problem may occur in the case where the UE initiates the PDU session establishment procedure before the PDU session release is successfully completed within the 5GC. Specifically, there is a risk of conflict or collision between an uncompleted PDU session release and a new PDU session establishment that are associated with the same PDU Session ID. Such a conflict (or a situation where such a conflict is occurring) can be referred to as "PDU Session ID duplicated".

This problem may occur not only in the case where the UE requests the SMF for a PDU session release (i.e., in the UE-initiated PDU Session release procedure). Specifically, this problem may occur also in the case where a Policy Control Function (PCF) requests the SMF for a PDU session release. This problem can also occur in the case where an Access Network (AN) requests the SMF for a PDU session release, in other words, the AN notifies the SMF of a release of the resources related to a PDU session and the SMF decides to release the PDU session based on the notification. Furthermore, this problem may occur in the case where the SMF decides to release a PDU session and initiates the PDU session release.

One of the objects to be attained by example embodiments disclosed herein is to provide apparatuses, methods, and programs that contribute to avoiding a conflict (or collision) between an uncompleted PDU session release and a new PDU session establishment that are associated with the same PDU Session ID. It should be noted that this object is merely one of the objects to be attained by the example embodiments disclosed herein. Other objects or problems and novel features will be made apparent from the following description and the accompanying drawings.

### Solution to Problem

In a first aspect, an AMF node includes at least one memory and at least one processor coupled to the at least one memory. The at least one processor is configured to, in response to receiving a first control message containing a first Session Management (SM) container from a Session Management Function (SMF), send a first Non-Access Stratum (NAS) message containing the first SM container to a radio terminal. The first SM container contains a PDU Session Release Command message sent from the SMF to the radio terminal in order to indicate release of a first PDU session associated with a first Protocol Data Unit (PDU) Session ID. The at least one processor is further configured to, after sending the first NAS message to the radio terminal, send to the radio terminal a second NAS message to indicate that the first PDU Session ID can be assigned to another PDU session different from the first PDU session.

In a second aspect, a method for an AMF node includes the following steps (a) and (b):
(a) in response to receiving a first control message containing a first Session Management (SM) container from a Session Management Function (SMF), sending a first Non-Access Stratum (NAS) message containing the first SM container to a radio terminal, the first SM container containing a PDU Session Release Command message sent from the SMF to the radio terminal in order to indicate release of a first PDU session associated with a first Protocol Data Unit (PDU) Session ID; and
(b) after sending the first NAS message to the radio terminal, sending to the radio terminal a second NAS message to indicate that the first PDU Session ID can be assigned to another PDU session different from the first PDU session.

In a third aspect, a radio terminal includes at least one memory and at least one processor coupled to the at least one memory. The at least one processor is configured to receive from an Access and Mobility Management Function (AMF) a first Non-Access Stratum (NAS) message containing a first Session Management (SM) container. The first SM container contains a PDU Session Release Command message sent from a Session Management Function (SMF) to the radio terminal in order to indicate release of a first PDU session associated with a first Protocol Data Unit (PDU) Session ID. The at least one processor is further configured to, after receiving the first NAS message, receive from the AMF a second NAS message indicating that the first PDU Session ID can be assigned to another PDU session different from the first PDU session.

In a fourth aspect, a method for a radio terminal includes the following steps (a) and (b):
(a) receiving from an Access and Mobility Management Function (AMF) a first Non-Access Stratum (NAS) message containing a first Session Management (SM) container, the first SM container containing a PDU Session Release Command message sent from a Session Management Function (SMF) to the radio terminal in order to indicate release of a first PDU session associated with a first Protocol Data Unit (PDU) Session ID; and
(b) after receiving the first NAS message, receiving from the AMF a second NAS message indicating that the first PDU Session ID can be assigned to another PDU session different from the first PDU session.

In a fifth aspect, a radio terminal includes at least one memory and at least one processor coupled to the at least one memory. The at least one processor is configured to receive from an Access and Mobility Management Function (AMF) a first Non-Access Stratum (NAS) message containing a first Session Management (SM) container . The first SM container contains a PDU Session Release Command message sent from a Session Management Function (SMF) to the radio terminal in order to indicate release of a first PDU session associated with a first Protocol Data Unit (PDU) Session ID. The at least one processor further receives a second NAS message from the AMF after receiving the first NAS message, and the at least one processor is allowed to assign the first PDU Session ID by receiving the second NAS message.

In a sixth aspect, a method of a radio terminal includes the following steps (a) and (b):
(a) receiving from an Access and Mobility Management Function (AMF) a first Non-Access Stratum (NAS) message containing a first Session Management (SM) container, the first SM container containing a PDU Session Release Command message sent from a Session Management Function (SMF) to the radio terminal in order to indicate release of a first PDU session associated with a first Protocol Data Unit (PDU) Session ID; and
(b) receiving a second NAS message from the AMF after receiving the first NAS message, and being allowed to assign the first PDU Session ID by receiving the second NAS message.

In a seventh aspect, a radio terminal includes at least one memory and at least one processor coupled to the at least one memory. The at least one processor is configured to, upon receiving from an Access and Mobility Management Function (AMF) a first control message that contains a Session Management (SM) container including a PDU Session Release Command, be unable or not allowed to assign a PDU Session ID specified by the PDU Session Release Command to another PDU session other than a PDU session specified by the PDU Session Release Command. The at least one processor is configured to, by receiving from an Access and Mobility Management Function (AMF) a first control message that contains a Session Management (SM) container including a NAS Notify, be allowed to assign a PDU Session ID specified by the NAS Notify to the other PDU session.

In an eighth aspect, a method for a radio terminal includes the following steps (a) and (b):
(a) upon receiving from an Access and Mobility Management Function (AMF) a first control message that contains a Session Management (SM) container including a PDU Session Release Command, being unable or not allowed to assign a PDU Session ID specified by the PDU Session Release Command to another PDU session other than a PDU session specified by the PDU Session Release Command; and
(b) by receiving from an Access and Mobility Management Function (AMF) a first control message that contains a Session Management (SM) container including a NAS Notify, being allowed to assign a PDU Session ID specified by the NAS Notify to the other PDU session.

In a ninth aspect, an AMF node includes at least one memory and at least one processor coupled to the at least one memory. The at least one processor is configured to determine whether a new PDU Session ID associated with a new Protocol Data Unit (PDU) session requested from a radio terminal is the same as a first PDU Session ID associated with an existing first PDU session that has not been successfully released. The at least one processor is further configured to, if the new PDU Session ID is the same as the first PDU Session ID, perform a procedure for avoiding a conflict between establishment of the new PDU session and release of the first PDU session.

In a tenth aspect, a method for an AMF node includes the following steps (a) and (b):
(a) determining whether a new PDU Session ID associated with a new Protocol Data Unit (PDU) session requested from a radio terminal is the same as a first PDU Session ID associated with an existing first PDU session that has not been successfully released; and
(b) if the new PDU Session ID is the same as the first PDU Session ID, performing a procedure for avoiding a conflict between establishment of the new PDU session and release of the first PDU session .

In an eleventh aspect, an SMF node includes at least one memory and at least one processor coupled to the at least one memory. The at least one processor is configured to receive a first NAS message for establishment of a new Protocol Data Unit (PDU) session from a radio terminal via an Access and Mobility Management Function (AMF). The at least one processor is further configured to, if a new PDU Session ID associated with the new PDU session is the same as a first PDU Session ID associated with an existing first PDU session that has not been successfully released, send a second NAS message indicating rejection of establishment of the new PDU session to the radio terminal via the AMF.

In a twelfth aspect, a method for an SMF node includes the following steps (a) and (b):
(a) receiving a first NAS message for establishment of a new Protocol Data Unit (PDU) session from a radio terminal via an Access and Mobility Management Function (AMF); and
(b) if a new PDU Session ID associated with the new PDU session is the same as a first PDU Session ID associated with an existing first PDU session that has not been successfully released, sending a second NAS message indicating rejection of establishment of the new PDU session to the radio terminal via the AMF.

In a thirteenth aspect, a radio terminal includes at least one memory and at least one processor coupled to the at least one memory. The at least one processor is configured to, for a first period associated with release of a first Protocol Data Unit (PDU) session, assign to a new PDU session to be established a PDU Session ID different from a first PDU Session ID that was assigned to the first PDU session.

In a fourteenth aspect, a method for a radio terminal includes the following steps (a) and (b):
(a) for a first period associated with release of a first Protocol Data Unit (PDU) session, assigning to a new PDU session to be established a PDU Session ID different from a first PDU Session ID that was assigned to the first PDU session; and
(b) initiating a PDU session establishment procedure using the different PDU Session ID.

In a fifteenth aspect, a radio terminal includes at least one memory and at least one processor coupled to the at least one memory. The at least one processor is configured to assign a Protocol Data Unit (PDU) Session ID that is different from most recently used one or more PDU Session IDs to a new PDU session to be established.

In a sixteenth aspect, a method for a radio terminal includes the following steps (a) and (b):
(a) assigning a Protocol Data Unit (PDU) Session ID that is different from most recently used one or more PDU Session IDs to a new PDU session to be established; and
(b) initiating a PDU session establishment procedure using the different PDU Session ID.

In a seventeenth aspect, a radio terminal includes at least one memory and at least one processor coupled to the at least one memory. The at least one processor is configured to, in at least a first attempt to establish a new Protocol Data Unit (PDU) session performed after release of a first PDU session, assign to the new PDU session a PDU Session ID different from a first PDU Session ID that was assigned to the first PDU session.

In an eighteenth aspect, a method for a radio terminal includes the following steps (a) and (b):
(a) in at least a first attempt to establish a new Protocol Data Unit (PDU) session performed after release of a first PDU session, assigning to the new PDU session a PDU Session ID different from a first PDU Session ID that was assigned to the first PDU session; and
(b) initiating a PDU session establishment procedure using the different PDU Session ID.

In a nineteenth aspect, a program includes instructions (software codes) that, when loaded into a computer, cause the computer to perform the method according to the above-described second, fourth, sixth, eighth, tenth, twelfth, fourteenth, sixteenth, or eighteenth aspect.

### Advantageous Effects of Invention

According to the above-described aspects, it is possible to provide apparatuses, methods, and programs that contribute to avoiding a conflict (or collision) between an uncompleted PDU session release and a new PDU session establishment that are associated with the same PDU Session ID.

### Brief Description of Drawings

Fig. 1 is a diagram showing a configuration example of a cellular network according to an example embodiment;
Fig. 2 is a sequence diagram showing one example of operations of a UE, an AMF, and an SMF according to an example embodiment;
Fig. 3 is a sequence diagram showing one example of operations of a UE, an AMF, and an SMF according to an example embodiment;
Fig. 4 is a sequence diagram showing one example of operations of a UE and an AMF according to an example embodiment;
Fig. 5 is a flowchart showing one example of operations of an AMF according to an example embodiment;
Fig. 6 is a flowchart showing one example of operations of an AMF according to an example embodiment;
Fig. 7 is a sequence diagram showing one example of operations of a UE, an AMF, and an SMF according to an example embodiment;
Fig. 8 is a flowchart showing one example of operations of an AMF according to an example embodiment;
Fig. 9 is a sequence diagram showing one example of operations of a UE, an AMF, and an SMF according to an example embodiment;
Fig. 10 is a flowchart showing one example of operations of an AMF according to an example embodiment;
Fig. 11 is a sequence diagram showing one example of operations of a UE, an AMF, and an SMF according to an example embodiment;
Fig. 12 is a flowchart showing one example of operations of an AMF according to an example embodiment;
Fig. 13 is a sequence diagram showing one example of operations of a UE, an AMF, and an SMF according to an example embodiment;
Fig. 14 is a flowchart showing one example of operations of a UE according to an example embodiment;
Fig. 15 is a flowchart showing one example of operations of a UE according to an example embodiment;
Fig. 16 is a flowchart showing one example of operations of a UE according to an example embodiment;
Fig. 17 is a block diagram showing a configuration example of a UE according to an example embodiment; and
Fig. 18 is a block diagram showing a configuration example of an AMF and an SMF according to an example embodiment.

### Description of Embodiments

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and also contribute to obtaining advantages different from one another.

The following descriptions on the example embodiments mainly focus on the 3GPP fifth generation mobile communication systems (5G system (5GS)). However, these example embodiments may be applied to other cellular communication systems that support session (or connection) establishment and release procedures similar to the 5GS.

### First Example Embodiment

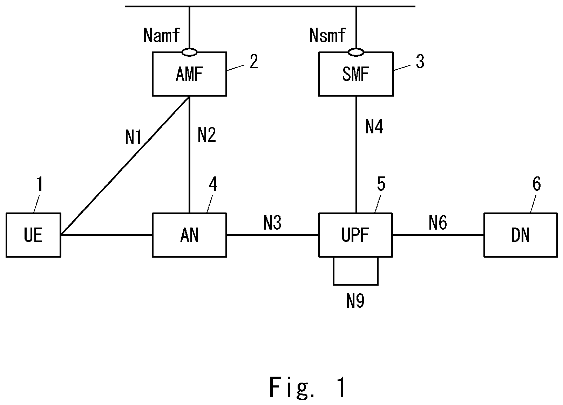

Fig. 1 shows a configuration example of a cellular network (i.e., 5GS) according to this example embodiment. Each of the elements shown in Fig. 1 is a network function and provides an interface defined by the 3rd Generation Partnership Project (3GPP). Each of the elements (network functions) shown in Fig. 1 may be implemented as, for example, a network element on a dedicated hardware, as a software instance running on the dedicated hardware, or as a virtualization function instantiated on an application platform.

A radio terminal (i.e., UE) 1 uses 5G connectivity services and communicates with an external data network (DN) 6. More specifically, the UE 1 is connected to an access network (i.e., 5GAN) 4 and communicates with the external data network (DN) 6 via a User Plane Function (UPF) 5 in a core network (i.e., 5GC). The AN 4 includes one or both of a Next Generation Radio Access Network (NG-RAN) and a non-3GPP AN. The UPF 5 may include multiple UPFs that are interconnected. The UE 1 establishes one or more PDU sessions between the UE 1 and the UPF 5 (i.e., UPF as a PDU session anchor connected to the DN 6). While not shown in Fig. 1, the UE 1 may establish multiple PDU sessions with multiple UPFs (PDU session anchors) 5 in order to concurrently access multiple DNs 6.

The AMF 2 is one of the network functions in the 5GC Control Plane. The AMF 2 provides the termination of a RAN Control Plane (CP) interface (i.e., N2 interface). The AMF 2 terminates a single signalling connection (i.e., N1 NAS signalling connection) with the UE 1 and provides registration management, connection management, and mobility management. The AMF 2 provides NF services to NF consumers (e.g., other AMFs, SMF, and PCF) on a service-based interface (i.e., Namf interface). The NF services provided by the AMF 2 include a communication service (Namf_Communication). The communication service allows NF consumers (e.g., SMF) to communicate with the UE 1 or the AN 4 via the AMF 2.

The SMF 3 is one of the network functions in the 5GC Control Plane. The SMF 3 manages PDU sessions. The SMF 3 sends and receives SM signalling messages (NAS-SM messages, N1 SM messages) to and from the NAS-SM layer of the UE 1 via the communication service provided by the AMF 2. The SMF 3 provides NF services to NF consumers (e.g., AMF, other SMFs) on a service-based interface (i.e., Nsmf interface). The NF services provided by the SMF 3 include a PDU session management service (Nsmf_PDUSession). This NF services allows NF consumers (e.g., AMF) to handle PDU sessions.

The configuration example in Fig. 1 shows only typical NFs for convenience of explanation. The cellular network according to this example embodiment may include other NFs not shown in Fig. 1, such as a UDM, a PCF, an Authentication Server Function (AUSF), and a Network Slice Selection Function (NSSF).

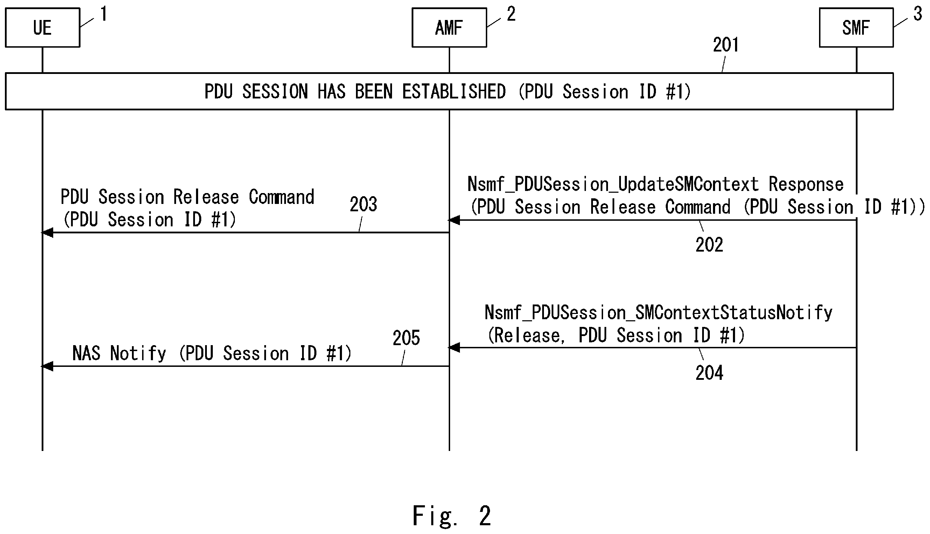

In the following, details of operations of the UE 1, the AMF 2, and the SMF 3 according to this example embodiment will be described. Fig. 2 shows one example of an operation regarding release of a first PDU session associated with PDU Session ID #1. In the example shown in Fig. 2, the UE 1 receives a PDU Session Release Command indicating release of the first PDU session associated with PDU Session ID #1 from the SMF 3 via the AMF 2 (Step 203), and then further receives an additional NAS message (e.g., NAS Notify) associated with PDU Session ID #1 from the AMF 2 or from the SMF 3 via the AMF 2 (Step 205).

The additional NAS message (Step 205) may explicitly or implicitly notify the UE 1 that the Session Management (SM) context for the first PDU session (PDU Session ID #1) has been successfully released in the 5GC. Additionally or alternatively, the additional NAS message (Step 205) may explicitly or implicitly allow the UE 1 to assign PDU Session ID #1 to a new PDU session different from the first PDU session.

The UE 1 may recognize that PDU Session ID #1 can be assigned to a new PDU session different from the first PDU session in response to the additional NAS message (Step 205). The UE 1 may operate so as not to assign PDU Session ID #1 to a new PDU session to be established until it receives an additional NAS message (Step 205) after sending a PDU Session Release Complete message towards the SMF 3 in response to the PDU Session Release Command message (Step 203). In other words, the UE 1 may operate so as to assign a PDU Session ID different from PDU Session ID #1 to a newly established PDU session at least until it receives an additional NAS message (Step 205).

The steps shown in Fig. 2 will be described in detail. In Step 201, the UE 1 establishes a first PDU session associated with PDU Session ID #1. Step 201 may be performed in accordance with the existing PDU session establishment procedure (see, for example, clause 4.3.2.2 of Non-Patent Literature 1).

Steps 202-205 are related to release of the first PDU session. In Step 202, the SMF 3 sends an N1 SM container containing a PDU Session Release Command to the AMF 2. The PDU Session Release Command is sent from the SMF 3 to the UE 1 to indicate the release of the first PDU session associated with PDU Session ID #1. Specifically, if the PDU session release is initiated by the UE 1, the SMF 3 sends the N1 SM container containing the PDU Session Release Command to the AMF 2 using an Nsmf_PDUSession_UpdateSMContext Response message. Likewise, if the PDU session release is triggered by the AN 4, the SMF 3 sends the N1 SM container containing the PDU Session Release Command to the AMF 2 using an Nsmf_PDUSession_UpdateSMContext Response message. On the other hand, if the PDU session release is initiated by the SMF 3 or the PCF, the SMF 3 sends the N1 SM container containing the PDU Session Release Command to the AMF 2 using an Namf_Communication_N1N2MessageTransfer message.

Next, in Step 203, the AMF 2 sends a NAS message including the N1 SM container including the PDU Session Release Command to the UE 1 via the AN 4. Steps 202 and 203 may be similar to the corresponding steps included in the existing PDU Session release procedure (see, for example, clause 4.3.4.2 of Non-Patent Literature 1).

Although not shown in Fig. 2, the UE 1 may send the PDU Session Release Complete message towards the SMF 3 in response to the PDU Session Release Command (Step 203) prior to receiving the additional NAS message (Step 205). More specifically, the UE 1 may send to the AMF 2 a NAS message including an N1 SM container containing the PDU Session Release Complete message to the SMF 3. The PDU Session Release Complete message indicates acceptance of the release of the PDU session identified by the PDU Session Release Command. The PDU Session Release Complete message may be referred to as a PDU Session Release Ack message.

In Step 204, the SMF 3 invokes an Nsmf_PDUSession_SMContextStatusNotify service operation to notify the AMF 2 that the SM context for the first PDU session is to be released. The Nsmf_PDUSession_SMContextStatusNotify message (Step 204) notifies the AMF 2 that the status of the SM context regarding the first PDU session associated with PDU Session ID #1 is "release".

In response to the Nsmf_PDUSession_SMContextStatusNotify message (Step 204), the AMF 2 releases the UE context (i.e., PDU session level context) related to the first PDU session. The PDU session level context managed by the AMF 2 includes, for example, an association among the SMF information (e.g., SMF ID), PDU Session ID, and DNN.

In Step 205, the AMF 2 sends the additional NAS message (e.g., NAS Notify) to the UE 1 in response to receiving the Nsmf_PDUSession_SMContextStatusNotify message (Step 204). The additional NAS message indicates PDU Session ID #1. The AMF 2 may send the additional NAS message (Step 205) before, after, or concurrently with the release of the UE context related to the first PDU session (i.e., PDU session level context).

The UE 1 receives the additional NAS message (Step 205) after receiving the NAS message containing the PDU Session Release Command (Step 203). As described above, the UE 1 may recognize in response to the additional NAS message (Step 205) that PDU Session ID #1 can be assigned to a new PDU session different from the first PDU session. In other words, the UE 1 may operate so as to assign a PDU Session ID different from PDU Session ID #1 to a new PDU session to be established, at least until it receives the additional NAS message (Step 205). The SMF 3 may send the additional NAS message (Step 205) to the UE 1 at any suitable time. For example, the SMF 3 may send the additional NAS message (Step 205) to the UE 1 after the state in which the first PDU session associated with PDU Session ID #1 has been established as shown in Step 201.

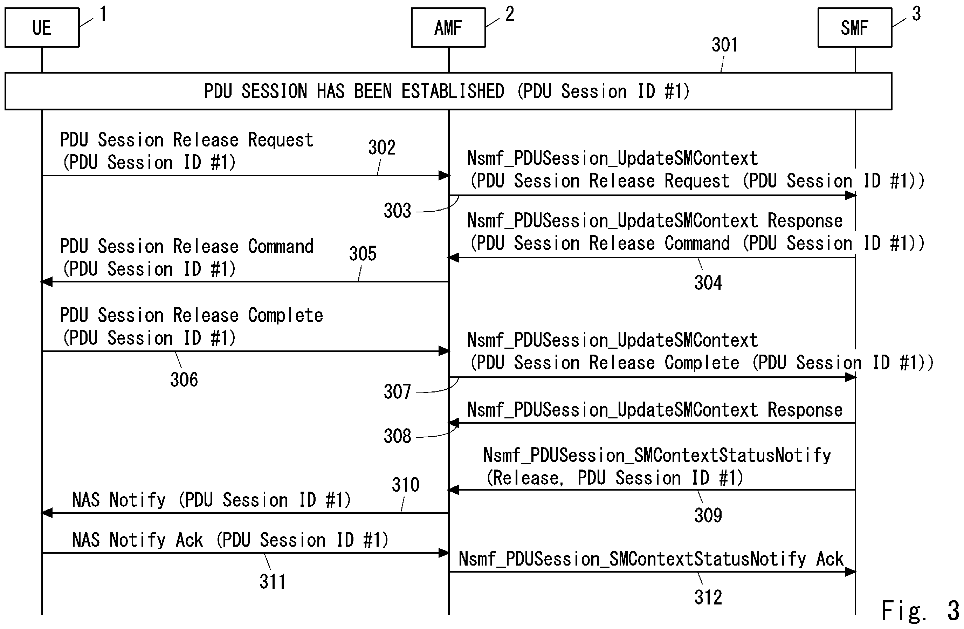

Fig. 3 shows in detail a specific example of the PDU Session release procedure initiated by the UE 1 according to this example embodiment. In Step 301, the UE 1 establishes a first PDU session associated with PDU Session ID #1. Step 301 may be performed according to the existing PDU session establishment procedure (see, for example, clause 4.3.2.2 of Non-Patent Literature 1).

Steps 302-312 are related to release of the first PDU session (PDU Session ID #1). Except for Steps 310 and 311, Steps 302-309 and 312 may be similar to the corresponding steps included in the existing PDU Session release procedure (see, for example, clause 4.3.4.2 of Non-Patent Literature 1). Steps 304 and 305 correspond to Steps 202 and 203 in Fig. 2 and Steps 309 and 310 correspond to Steps 204 and 205 in Fig. 2.

In Step 302, the UE 1 initiates a PDU Session release procedure to request the release of the first PDU session associated with PDU Session ID #1. Specifically, the UE 1 sends a PDU Session Release Request to the SMF 3 via the AMF 2. More specifically, the UE 1 sends a NAS message, containing PDU Session ID #1 and an N1 SM container (PDU Session Release Request (PDU Session ID #1)), to the AMF 2. In Step 303, the AMF 2 invokes an Nsmf_PDUSession_UpdateSMContext service operation and forwards the N1 SM container to the SMF 3 that corresponds to PDU Session ID #1.

In response to Step 303, the SMF 3 releases the IP address and Prefix(es) assigned to the first PDU session, and releases the corresponding user plane resources. Then, in Step 304, the SMF 3 responds to the AMF 2 with an Nsmf_PDUSession_UpdateSMContext response. The Nsmf_PDUSession_UpdateSMContext response contains an N1 SM container (PDU Session Release Command (PDU Session ID #1)). In Step 305, the AMF 2 sends the N1 SM container (PDU Session Release Command (PDU Session ID #1)) received from the SMF 3 to the UE 1. Specifically, the AMF 2 sends a NAS message to the UE 1 that contains PDU Session ID #1 and the N1 SM container. This NAS message reaches the UE 1 via the AN 4.

In Step 306, the UE 1 sends a NAS message containing PDU Session Release Complete to the AMF 2 to acknowledge the PDU Session Release Command. This NAS message contains the PDU Session ID of the PDU session to be released, and the N1 SM container (PDU Session Release Complete). In Step 307, the AMF 2 invokes an Nsmf_PDUSession_UpdateSMContext service operation and forwards the N1 SM container to the SMF 3 corresponding to PDU Session ID #1. In Step 308, the SMF 3 responds to the AMF 2 with an Nsmf_PDUSession_UpdateSMContext response.

In Step 309, the SMF 3 invokes an Nsmf_PDUSession_SMContextStatusNotify service operation to notify the AMF 2 that the SM context for the first PDU session is to be released. The Nsmf_PDUSession_SMContextStatusNotify message (Step 309) notifies the AMF 2 that the status of the SM context regarding the first PDU session associated with PDU Session ID #1 is "release".

In response to the Nsmf_PDUSession_SMContextStatusNotify message (Step 309), the AMF 2 releases the PDU session level context related to the first PDU session. In Step 310, the AMF 2 sends an additional NAS message (e.g., NAS Notify) to the UE 1 in response to the reception of the Nsmf_PDUSession_SMContextStatusNotify message (Step 309). The additional NAS message indicates PDU Session ID #1. The AMF 2 may send the additional NAS message (Step 310) before, after, or concurrently with the release of the PDU session level context related to the first PDU session. Upon receiving the additional NAS message, the UE 1 is allowed to assign PDU Session ID #1 to a PDU session different from the first PDU session.

In Step 311, the UE 1 responds to the AMF 2 with a NAS message (e.g., NAS Notify Ack). Step 311 may be omitted.

In Step 312, the AMF 2 responds to the SMF 3 with Nsmf_PDUSession_SMContextStatusNotify Ack. In one example, the AMF 2 may perform Step 312 in response to the reception of the NAS message in Step 311. Alternatively, the AMF 2 may perform Step 312 regardless of the reception of the NAS message in Step 311. For example, the AMF 2 may perform Step 312 prior to Step 311.

The procedures shown in Figs. 2 and 3 may be modified, for example, as follows. The SMF 3 may send an N1 SM container destined for the UE 1 to the AMF 2 using an Namf_Communication_N1N2MessageTransfer message before or after the Nsmf_PDUSession_SMContextStatusNotify service operation (Steps 204 and 309). Then, the AMF 2 may send the additional NAS message containing that N1 SM container (Steps 205 and 310) to the UE 1. The N1 SM container may contain, for example, a new SM signalling message for notifying the UE 1 that the SM context for one PDU session is to be released. In other words, the transmission of the additional NAS message by the AMF 2 (Steps 205 and 310) may be triggered by a control message other than Nsmf_PDUSession_SMContextStatusNotify.

As can be understood from the above description, in this example embodiment, the AMF 2 (or the SMF 3), in a PDU Session release procedure, sends an additional NAS message (e.g., Steps 205 and 310) to the UE 1 in addition to the NAS message containing the PDU Session Release Command. This, for example, enables the UE 1 not to assign PDU Session ID #1 to a new PDU session to be established at least until it receives the additional NAS message (e.g., Steps 205 and 310). Accordingly, this example embodiment can contribute to avoiding a conflict (interference, collision, or PDU Session ID duplicated) between an uncompleted PDU session release and a new PDU session establishment that are associated with the same PDU Session ID.

### Second Example Embodiment

The configuration example of a cellular network according to this example embodiment may be similar to the example shown in Fig. 1. The UE 1 may notify the AMF 2 that the UE 1 supports the PDU Session release procedure described in the first example embodiment (hereinafter also referred to as the enhanced PDU Session release procedure). For example, the UE 1 may send capability information to the AMF 2 indicating that the UE 1 has the capability of handling the enhanced PDU Session release procedure. The AMF 2 may determine whether to use the enhanced PDU Session release procedure for the UE 1 depending on whether the AMF 2 has received the capability information from the UE 1. In addition, the AMF 2 may notify the UE 1 that the AMF 2 will apply the enhanced PDU Session release procedure, depending on whether it has received the capability information from the UE 1. This enhanced PDU Session release procedure may be the normal PDU Session release procedure including a procedure for sending an additional NAS message (e.g., Step 205 or Step 310 in the first example embodiment) to the UE 1.

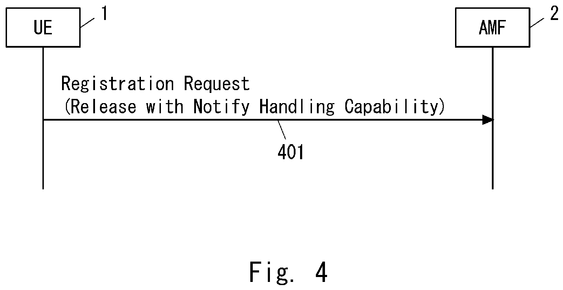

More specifically, as shown in Fig. 4, the UE 1 may send such capability information (e.g., "Release with Notify Handling Capability") to the AMF 2 in a registration procedure of the UE 1 to the 5GS. The UE 1 may include the capability information in a Registration Request message (Step 401). This capability information may be added to an existing information element (e.g., "5GMM capability" information element). Furthermore, in the registration procedure of the UE 1, the AMF 2 may inform the UE 1 of the use of the enhanced PDU Session release procedure. For example, the AMF 2 may include in a Registration Accept message an information element indicating the use of the enhanced PDU Session release procedure. The name of the information element may be, for example, "Release with Notify Handling Capability", "Release with Notify Handling Adapted", or "Duplicated PDU Session ID detection capability supported". An existing information element (e.g., "5GS network feature support" information element) may be used by the AMF 2 to indicate the use of the (enhanced) PDU Session release procedure to the UE 1. The AMF 2 may consider one or both of the capability of the SMF 3 connected to the UE 1 and the capability of the SMF 3 that is expected to be connected to the UE 1 when determining whether to set the information element indicating the use of the enhanced PDU Session release procedure in the Registration Accept message.

In some implementations, if the UE 1 has received information indicating the use of the (enhanced) PDU Session release procedure from the AMF 2 via the Registration Accept message, the UE 1 cannot or is not allowed to assign PDU Session ID #1 to a PDU session other than the first PDU session even after receiving the N1 SM container (PDU Session Release Command (PDU Session ID #1)).

The procedure of this example embodiment allows the 5GS (AMF 2) to provide connectivity services to UEs that support the enhanced PDU Session release procedure and UEs that do not support it. This procedure may be used to inform the AMF 2 of the support of the enhanced PDU Session release procedure according to example embodiments described below.

### Third Example Embodiment

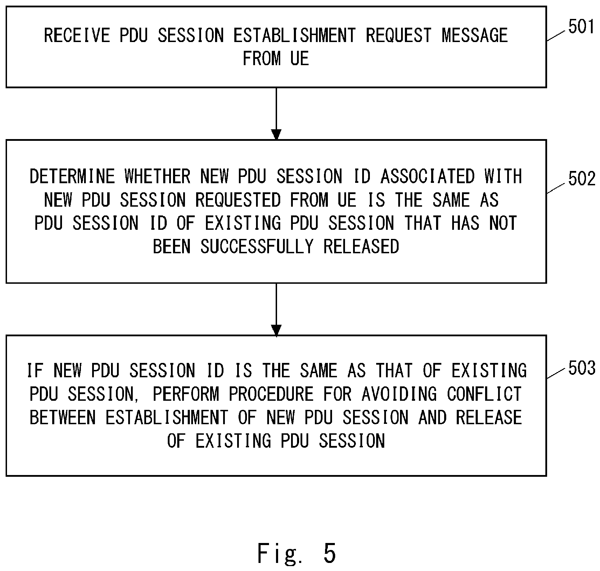

This example embodiment provides another solution for avoiding a conflict between establishment of a new PDU session and release of an existing PDU session. The configuration example of a cellular network according to this example embodiment may be similar to the example shown in Fig. 1. Fig. 5 is a flowchart showing one example of operations of the AMF 2 according to this example embodiment. In Step 501, the AMF 2 receives a PDU Session Establishment Request message from the UE 1. Specifically, the AMF 2 receives a NAS message containing a PDU Session ID, a Request type indicating "initial request" or "initial emergency request", and an N1 SM container (PDU Session Establishment Request) from the UE 1.

In Step 502, the AMF 2 determines whether the new PDU Session ID associated with the new PDU session requested from the UE 1 is the same as the PDU Session ID of an existing PDU session that has not been successfully released. The AMF 2 may perform this determination when the Request type contained in the NAS message from the UE 1 indicates "initial request" or "initial emergency request". More specifically, when the Request type contained in the NAS message from the UE 1 indicates "initial request" or "initial emergency request" and the AMF 2 holds a valid PDU session level context associated with the PDU Session ID contained in this NAS message, the AMF 2 may determine that the new PDU Session ID is the same as that of the existing PDU session.

In Step 503, if the new PDU Session ID is the same as that of the existing PDU session, the AMF 2 performs a procedure to avoid a conflict between the establishment of the new PDU session and the release of the existing PDU session. There are several possible solutions for the procedure to avoid a conflict. In this example embodiment, one or some solutions will be described. Other solutions will be described in subsequent example embodiments.

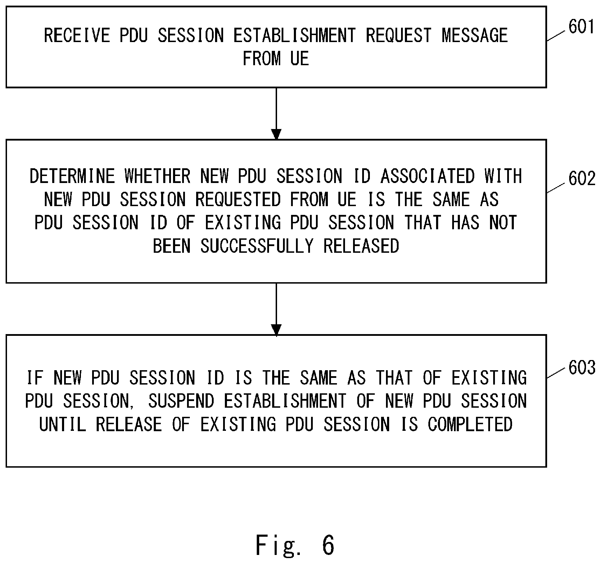

In one example, the AMF 2 may perform the procedure shown in Fig. 6. Steps 601 and 602 are similar to Steps 501 and 502 in Fig. 5. In Step 603, when the new PDU Session ID is the same as that of the existing PDU session, the AMF 2 suspends the establishment of the new PDU session until the release of the existing PDU session is completed. More specifically, the AMF 2 may refrain from sending the NAS message for establishing the new PDU session (i.e., PDU Session Establishment Request message) to the SMF 3 until the release of the existing PDU session is completed.

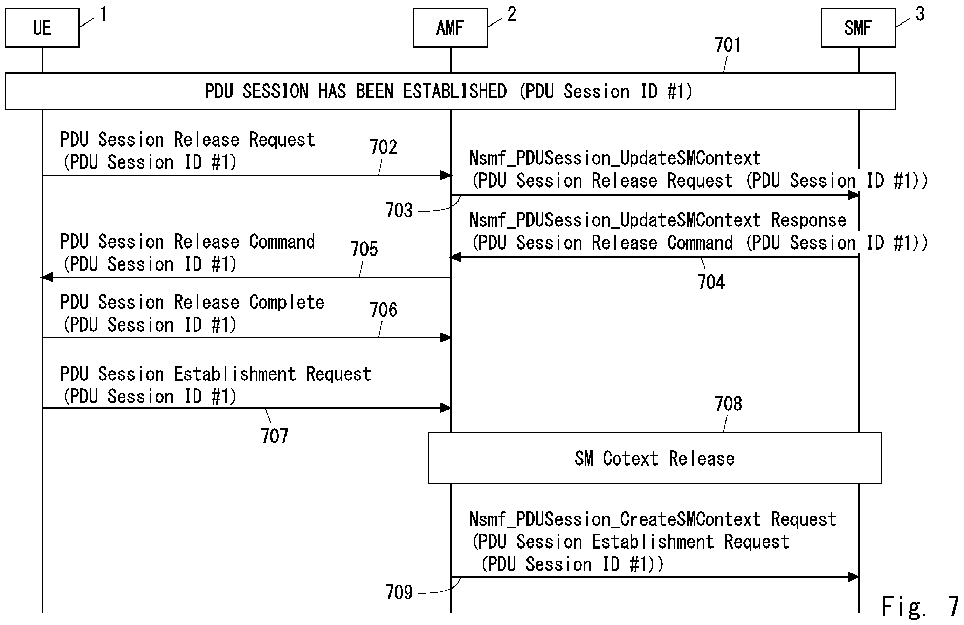

Fig. 7 shows in detail a specific example of the PDU Session release procedure initiated by the UE 1 according to this example embodiment. Steps 701-706 are similar to Steps 301-306 in Fig. 3. Specifically, in Step 701, the UE 1 establishes a first PDU session associated with PDU Session ID #1. Step 301 may be performed according to the existing PDU session establishment procedure (see, for example, clause 4.3.2.2 of Non-Patent Literature 1). Steps 702-706 are related to the release of the first PDU session (PDU Session ID #1). Steps 702-706 may be similar to the corresponding steps included in the existing PDU Session release procedure (see, for example, clause 4.3.4.2 of Non-Patent Literature 1).

In Step 707, the AMF 2 receives a NAS message from the UE 1. The NAS message contains PDU Session ID #1, a Request type indicating "initial request" or "initial emergency request", and an N1 SM container (PDU Session Establishment Request). The NAS message is received by the AMF 2 prior to the completion of the step (Step 708) for the release (removal) of the SM context regarding the first PDU session in the 5GC. The NAS message may be received before the start of Step 708, or it may be received while Step 708 is being performed. Step 708 at least includes an Nsmf_PDUSession_SMContextStatusNotify service operation (similar to Step 309 in Fig. 3) for notifying the AMF 2 that the SM context for the first PDU session is to be released. Step 708 may further include the transmission of an N1 SM container (PDU Session Release Complete (PDU Session ID #1)) from the AMF 2 to the SMF 3 (similar to Step 307 in Fig. 3). Step 708 may further include the transmission of an Nsmf_PDUSession_SMContextStatusNotify Ack message from the AMF 2 to the SMF 3 (similar to Step 312 in Fig. 3).

In Step 709, the AMF 2 sends the suspended (or postponed) N1 SM container (PDU Session Establishment Request) to the SMF 3. Specifically, the AMF 2 sends an Nsmf_PDUSession_CreateSMContext Request containing the N1 SM container (PDU Session Establishment Request). The AMF 2 may select a different SMF from the SMF 3 that was managing the released first PDU session and send the N1 SM container (PDU Session Establishment Request) to the selected SMF.

The operation of the AMF 2 according to this example embodiment may be performed in a procedure other than the PDU Session release procedure initiated by the UE 1 (e.g., Fig. 7). Specifically, the operation of the AMF 2 according to this example embodiment may be applied to PDU session release triggered by the AN 4, PDU session release initiated by the SMF 3, and PDU session release initiated by the PCF.

The procedure described in the second example embodiment may be used to notify the AMF 2 that the UE 1 is supporting the PDU Session release procedure described in this example embodiment.

As can be understood from the above description, in this example embodiment, in response to determining that the same PDU Session ID is assigned to both a new PDU session and an existing PDU session, the AMF 2 suspends the establishment of the new PDU session until the release of the existing PDU session is completed. Accordingly, this example embodiment can contribute to avoiding a conflict (interference, collision, or PDU Session ID duplicated) between an uncompleted PDU session release and a new PDU session establishment that are associated with the same PDU Session ID.

### Fourth Example Embodiment

This example embodiment provides another solution for avoiding a conflict between establishment of a new PDU session and release of an existing PDU session. The configuration example of a cellular network according to this example embodiment may be similar to the example shown in Fig. 1.

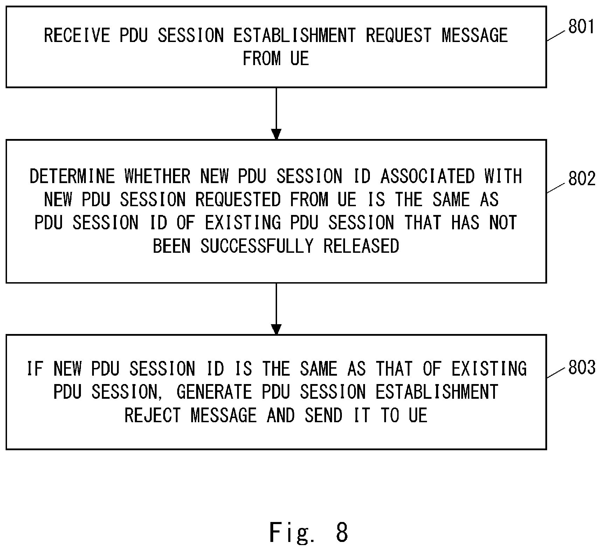

Fig. 8 is a flowchart showing one example of the operations of the AMF 2 according to this example embodiment. Steps 801 and 802 are similar to Steps 501 and 502 in Fig. 5. In Step 803, when the new PDU Session ID is the same as that of the existing PDU session, the AMF 2 responds to the UE 1 with a NAS message indicating the rejection of the establishment of the new PDU session without sending the PDU Session Establishment Request message to any SMF.

Specifically, the AMF 2 may generate a PDU Session Establishment Reject message and send it to the UE 1. This PDU Session Establishment Reject message may indicate a new cause (e.g., 5GSM Cause) indicating that the PDU session establishment is temporarily rejected, and may indicate a back-off timer value. The new 5GSM Cause may be defined, for example, as "Temporarily Reject". The back-off timer value is applied to a new timer running in the UE 1. Alternatively, the back-off timer value may be applied to an existing timer (e.g., T3580). If the UE 1 receives the PDU Session Establishment Reject message including a 5GSM Cause "Temporarily Reject" and the back-off timer value, the UE 1 may start the (new or existing) timer where the back-off timer value is set and refrain from sending a new PDU Session Establishment Request until the timer expires. In other words, the UE 1 may perform transmission of a new PDU Session Establishment Request (or retransmission of the PDU Session Establishment Request that was once rejected) upon expiration of the back-off timer value sent from the AMF 2.

If the PDU Session Establishment Reject message sent from the AMF 2 includes the new 5GSM Cause (e.g., "Temporarily Reject") but does not include a back-off timer value, the UE 1 may set a back-off timer value based on internally configured data of the UE 1 (UE Local configuration) in the (new or existing) timer and initiate this timer. The UE 1 may then perform transmission of a new PDU Session Establishment Request (or retransmission of the PDU Session Establishment Request that was once rejected) upon expiration of that timer. The back-off timer value based on the internally configured data of the UE 1 (UE Local configuration) may be, for example, a few seconds, specifically 2 to 3 seconds.

If the UE 1 receives a PDU Session Establishment Reject message that includes no back-off timer value while the timer for message retransmission (e.g., T3580) is already running in the UE 1, the UE 1 may stop this timer, set a back-off timer value based on the internally configured data of the UE 1 (UE Local configuration) in this timer, and restart this timer. Alternatively, if the UE 1 receives a PDU Session Establishment Reject message that includes no back-off timer value while the timer for message retransmission (e.g., T3580) is already running in the UE 1, the UE 1 may stop this timer, set a back-off timer value based on the internally configured data of the UE 1 (UE Local configuration) in a different timer from the timer for message retransmission, and start the different timer.

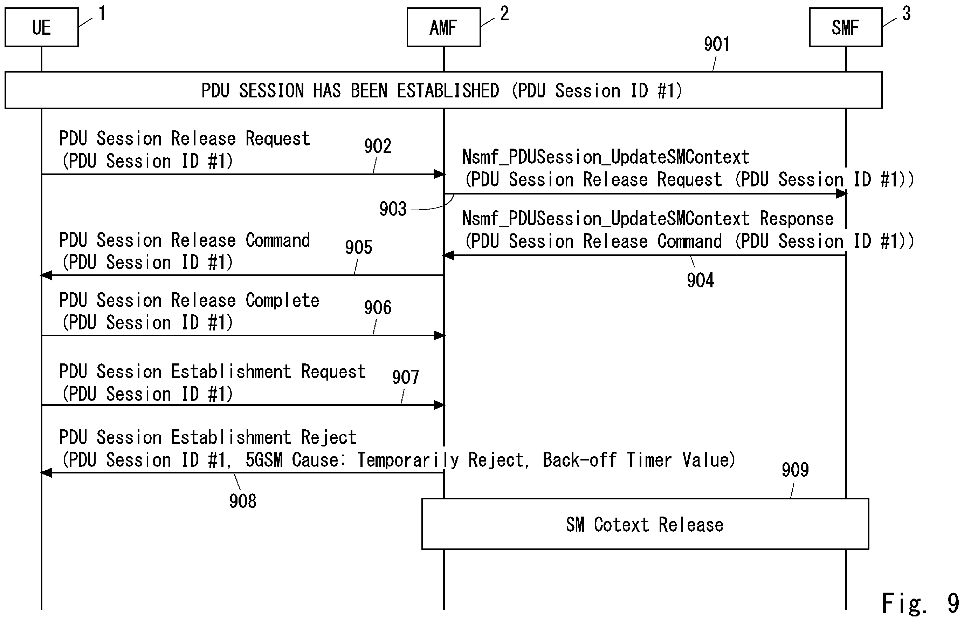

Fig. 9 shows in detail a specific example of the PDU Session release procedure initiated by the UE 1 according to this example embodiment. Steps 901-907 are similar to Steps 701-707 in Fig. 7. The NAS message (PDU Session Establishment Request) of Step 907 is received by the AMF 2 prior to the completion of the step (Step 909) for the release (removal) of the SM context regarding the first PDU session in the 5GC. This NAS message may be received before the start of Step 909, or it may be received while Step 909 is being performed. Similar to Step 708 in Fig. 7, Step 909 at least includes an Nsmf_PDUSession_SMContextStatusNotify service operation (similar to Step 309 in Fig. 3) for notifying the AMF 2 that the SM context for the first PDU session is to be released. Step 909 may further include the transmission of an N1 SM container (PDU Session Release Complete (PDU Session ID #1)) from the AMF 2 to the SMF 3 (similar to Step 307 in Fig. 3). Step 909 may further include the transmission of an Nsmf_PDUSession_SMContextStatusNotify Ack message from the AMF 2 to the SMF 3 (similar to Step 312 in Fig. 3).

In Step 908, the AMF 2 responds to the UE 1 with a NAS message indicating rejection of the establishment of the new PDU session without sending the PDU Session Establishment Request message to any SMF. As described above, the AMF 2 may generate a PDU Session Establishment Reject message and send it to the UE 1. The PDU Session Establishment Reject message may include a 5GSM Cause "Temporarily Reject" and a back-off timer value. This NAS message (e.g., PDU Session Establishment Reject message) may be sent before the start of Step 909, or it may be sent while Step 909 is being performed.

In some implementations, the AMF 2 may send information indicating the use of the enhanced PDU Session release procedure (e.g., "5GS network feature support" information element) to the UE 1 via a Registration Accept message in a location registration process (registration procedure) of the UE 1. Then, if the AMF 2 has sent the information indicating the use of the enhanced PDU Session release procedure to the UE 1 in the location registration process, the AMF 2 may generate a PDU Session Establishment Reject message and send it to the UE 1. In contrast, the AMF 2 may discard the PDU Session Establishment Request message received in Step 907 if it has not sent the information indicating the use of the enhanced PDU Session release procedure to the UE 1 in the location registration process.

The operation of the AMF 2 according to this example embodiment may be performed in a procedure other than the PDU Session release procedure initiated by the UE 1 (e.g., Fig. 9). Specifically, the operation of the AMF 2 according to this example embodiment may be applied to PDU session release triggered by the AN 4, PDU session release initiated by the SMF 3, and PDU session release initiated by the PCF.

The procedure described in the second example embodiment may be used to notify the AMF 2 that the UE 1 is supporting the PDU Session release procedure described in this example embodiment.

As can be understood from the above description, in this example embodiment, in response to determining that the same PDU Session ID is assigned to both a new PDU session and an existing PDU session, the AMF 2 rejects establishment of the new PDU session. Accordingly, this example embodiment can contribute to avoiding a conflict (interference, collision, or PDU Session ID duplicated) between an uncompleted PDU session release and a new PDU session establishment that are associated with the same PDU Session ID.

### Fifth Example Embodiment

This example embodiment provides another solution for avoiding a conflict between establishment of a new PDU session and release of an existing PDU session. The configuration example of a cellular network according to this example embodiment may be similar to the example shown in Fig. 1.

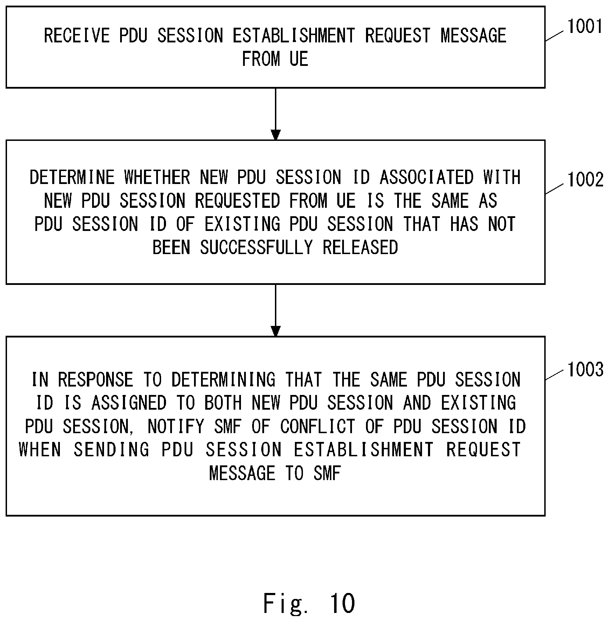

Fig. 10 is a flowchart showing one example of the operations of the AMF 2 according to this example embodiment. Steps 1001 and 1002 are similar to Steps 501 and 502 in Fig. 5. In Step 1003, in response to determining that the same PDU Session ID is assigned to both a new PDU session and an existing PDU session, the AMF 2 informs a selected SMF 3 of a conflict of the PDU Session ID when sending the PDU Session Establishment Request message to that SMF 3. For example, the AMF 2 may send the N1 SM container (PDU Session Establishment Request) to the selected SMF 3 along with an indication of a PDU Session ID conflict (e.g., "PDU Session ID Conflict" or "Duplicated PDU Session ID in AMF"). The selected SMF 3 may be the same as or different from the SMF that manages the existing PDU session.

If the selected SMF 3 receives the indication of a PDU Session ID conflict, it may generate a PDU Session Establishment Reject message and send it to the UE 1 to reject the establishment of the new PDU session. This PDU Session Establishment Reject message may indicate a new cause (e.g., 5GSM Cause) indicating that the PDU session establishment is temporarily rejected, and may indicate a back-off timer value. The new 5GSM Cause may be defined as, for example, "Temporarily Reject". The back-off timer value is applied to a new timer running in the UE 1. Alternatively, the back-off timer value may be applied to an existing timer (e.g., T3580). If the UE 1 receives the PDU Session Establishment Reject message including a 5GSM Cause "Temporarily Reject" and a back-off timer value, the UE 1 may start the (new or existing) timer where the back-off timer value is set and refrain from sending a new PDU Session Establishment Request until the timer expires. In other words, the UE 1 may perform transmission of a new PDU Session Establishment Request (or retransmission of the PDU Session Establishment Request that was once rejected) upon expiration of the back-off timer value sent from the selected SMF 3.

If the PDU Session Establishment Reject message sent from the AMF 2 includes the new 5GSM Cause (e.g., "Temporarily Reject") but does not include a back-off timer value, the UE 1 may set a back-off timer value based on internally configured data of the UE 1 (UE Local configuration) in the (new or existing) timer and initiate this timer. The UE 1 may then perform transmission of a new PDU Session Establishment Request (or retransmission of the PDU Session Establishment Request that was once rejected) upon expiration of that timer. The back-off timer value based on the internally configured data of the UE 1 (UE Local configuration) may be, for example, a few seconds, specifically 2 to 3 seconds.

If the UE 1 receives a PDU Session Establishment Reject message that includes no back-off timer value while the timer for message retransmission (e.g., T3580) is already running in the UE 1, the UE 1 may stop this timer, set a back-off timer value based on the internally configured data of the UE 1 (UE Local configuration) in this timer, and restart this timer. Alternatively, if the UE 1 receives a PDU Session Establishment Reject message that includes no back-off timer value while the timer for message retransmission (e.g., T3580) is already running in the UE 1, the UE 1 may stop this timer, set a back-off timer value based on the internally configured data of the UE 1 (UE Local configuration) in a different timer from the timer for message retransmission, and start the different timer.

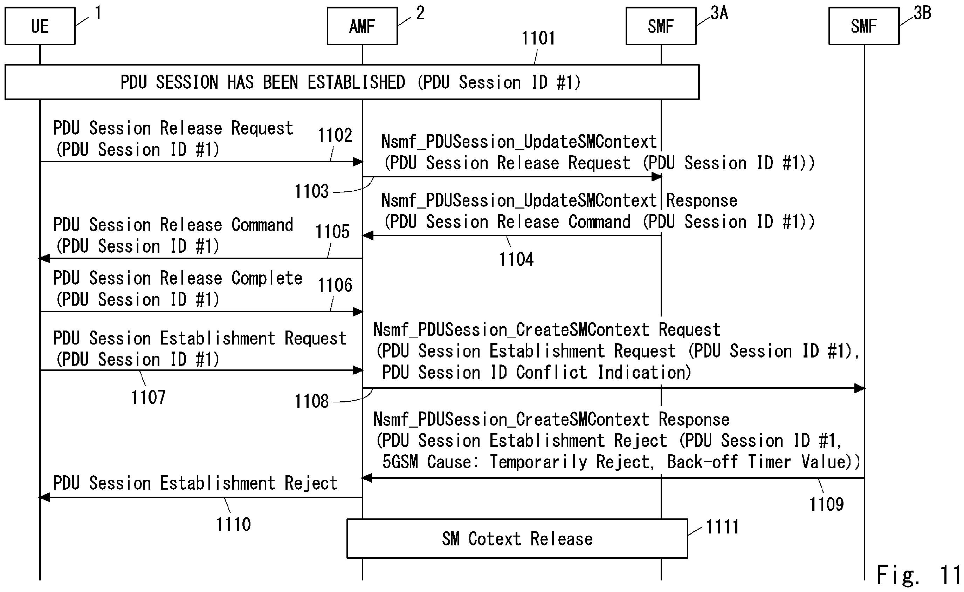

Fig. 11 shows in detail a specific example of the PDU Session release procedure initiated by the UE 1 according to this example embodiment. Steps 1101-1107 are similar to Steps 701-707 in Fig. 7. In the example shown in Fig. 11, the first PDU session is managed by the SMF 3A.

The NAS message of Step 1107 (PDU Session Establishment Request) is received by the AMF 2 prior to the completion of the step (Step 1111) for release (removal) of the SM context regarding the first PDU session in the 5GC. This NAS message may be received before the start of Step 1111, or it may be received while Step 1111 is being performed. Similar to Step 708 in Fig. 7, Step 1111 at least includes an Nsmf_PDUSession_SMContextStatusNotify service operation (similar to Step 309 in Fig. 3) for notifying the AMF 2 that the SM context for the first PDU session is to be released. Step 1111 may further include the transmission of an N1 SM container (PDU Session Release Complete (PDU Session ID #1)) from the AMF 2 to the SMF 3A (similar to Step 307 in Fig. 3). Step 1111 may further include the transmission of an Nsmf_PDUSession_SMContextStatusNotify Ack message from the AMF 2 to the SMF 3A (similar to Step 312 in Fig. 3).

In Step 1108, the AMF 2 selects an SMF and sends an Nsmf_PDUSession_CreateSMContext Request message to the selected SMF (in Fig. 11, SMF 3B that was not managing the existing PDU session). This message contains PDU Session ID #1 and the N1 SM container (PDU Session Establishment Request), and further contains an indication of a PDU Session ID conflict (e.g., "PDU Session ID Conflict" or "Duplicated PDU Session ID in AMF").

In some implementations, the AMF 2 may send information indicating the use of the enhanced PDU Session release procedure (e.g., "5GS network feature support" information element) to the UE 1 via a Registration Accept message in a location registration process (registration procedure) of the UE 1. Then, if the AMF 2 has sent the information indicating the use of the enhanced PDU Session release procedure to the UE 1 in the location registration process, the AMF 2 may send the Nsmf_PDUSession_CreateSMContext Request message to the selected SMF (the SMF 3B in Fig. 11). In contrast, the AMF 2 may discard the PDU Session Establishment Request message received in Step 1107 if it has not sent the information indicating the use of the enhanced PDU Session release procedure to the UE 1 in the location registration process.

In Step 1109, the SMF 3B responds to the UE 1 with a NAS message indicating rejection of the establishment of the new PDU session. The SMF 3 may generate a PDU Session Establishment Reject message and send it to the UE 1. The PDU Session Establishment Reject message may include a 5GSM Cause "Temporarily Reject" and a back-off timer value. The NAS message (e.g., PDU Session Establishment Reject message) may be sent before the start of Step 1111, or it may be sent while Step 1111 is being performed. The Nsmf_PDUSession_CreateSMContext Response message sent from the SMF 3 to the AMF 2 contains an N1 SM container (PDU Session Establishment Reject). This message may further contain an indication of a PDU Session ID conflict (e.g., "PDU Session ID Conflict" or "Duplicated PDU Session ID in AMF").

The AMF 2 may select the SMF 3A that was managing the existing PDU session instead of the SMF 3B in Step 1108. In this case, the AMF 2 may send the Nsmf_PDUSession_CreateSMContext Request message to the SMF 3A and the SMF 3A may perform the processing of Step 1109.

The operation of the AMF 2 according to this example embodiment may be performed in a procedure other than the PDU Session release procedure initiated by the UE 1 (e.g., Fig. 11). Specifically, the operation of the AMF 2 according to this example embodiment may be applied to PDU session release triggered by the AN 4, PDU session release initiated by the SMF 3, and PDU session release initiated by the PCF.

The procedure described in the second example embodiment may be used to notify the AMF 2 that the UE 1 is supporting the PDU Session release procedure described in this example embodiment.

As can be understood from the above description, in this example embodiment, in response to determining that the same PDU Session ID is assigned to both a new PDU session and an existing PDU session, the AMF 2 notifies the SMF 3 (e.g., the SMF 3B) of duplication of the PDU Session ID. This allows the SMF 3, for example, to reject the establishment of the new PDU session. Accordingly, this example embodiment can contribute to avoiding a conflict (interference, collision, or PDU Session ID duplicated) between an uncompleted PDU session release and a new PDU session establishment that are associated with the same PDU Session ID.

### Sixth Example Embodiment

This example embodiment provides another solution for avoiding a conflict between establishment of a new PDU session and release of an existing PDU session. The configuration example of a cellular network according to this example embodiment may be similar to the example shown in Fig. 1.

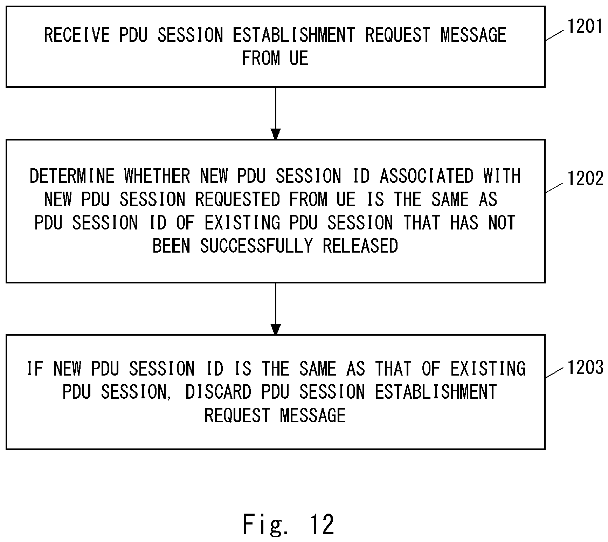

Fig. 12 is a flowchart showing one example of the operations of the AMF 2 according to this example embodiment. Steps 1201 and 1202 are similar to Steps 501 and 502 in Fig. 5. In Step 1203, if the new PDU Session ID is the same as that of an existing PDU session, the AMF 2 discards the PDU Session Establishment Request message without sending it to any SMF.

In this case, the UE 1 performs a retransmission operation of the PDU Session Establishment Request message using an existing timer (i.e., T3580). The UE 1 starts the timer T3580 in response to the transmission of the first PDU Session Establishment Request message. If the timer T3580 has expired, the UE 1 resends the PDU Session Establishment Request message to the AMF 2. The timer value of the timer T3580 specified in the current 3GPP specifications is 16 seconds.

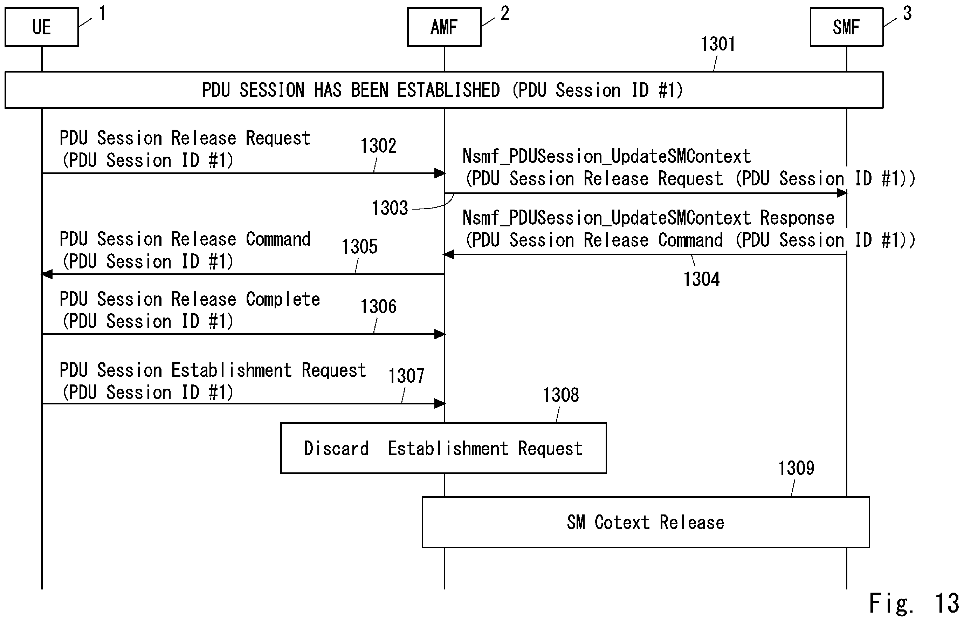

Fig. 13 shows in detail a specific example of the PDU Session release procedure initiated by the UE 1 according to this example embodiment. Steps 1301-1307 are similar to Steps 701-707 in Fig. 7. The NAS message (PDU Session Establishment Request) of Step 1307 is received by the AMF 2 prior to the completion of the step (Step 1309) for release (removal) of the SM context regarding the first PDU session in the 5GC. This NAS message may be received before the start of Step 1309, or it may be received while Step 1309 is being performed. Like in Step 708 in Fig. 7, Step 1309 at least includes an Nsmf_PDUSession_SMContextStatusNotify service operation for notifying the AMF 2 that the SM context for the first PDU session is to be released (similar to Step 309 in Fig. 3). Step 1309 may further include the transmission of an N1 SM container (PDU Session Release Complete (PDU Session ID #1)) from the AMF 2 to the SMF 3 (similar to Step 307 in Fig. 3). Step 1309 may further include the transmission of an Nsmf_PDUSession_SMContextStatusNotify Ack message from the AMF 2 to the SMF 3 (similar to Step 312 in Fig. 3).

In Step 1308, the AMF 2 discards the PDU Session Establishment Request message at the AMF 2 without sending it to any SMF.

The operation of the AMF 2 according to this example embodiment may be performed in a procedure other than the PDU Session release procedure initiated by the UE 1 (e.g., Fig. 13). Specifically, the operation of the AMF 2 according to this example embodiment can be applied to PDU session release triggered by the AN 4, PDU session release initiated by the SMF 3, and PDU session release initiated by the PCF.

The procedure described in the second example embodiment may be used to notify the AMF 2 that the UE 1 is supporting the PDU Session release procedure described in this example embodiment.

As can be understood from the above description, in this example embodiment, in response to determining that the same PDU Session ID is assigned to both a new PDU session and an existing PDU session, the AMF 2 discards the PDU Session Establishment Request message. Accordingly, this example embodiment can contribute to avoiding a conflict (interference, collision, or PDU Session ID duplicated) between an uncompleted PDU session release and a new PDU session establishment that are associated with the same PDU Session ID.

### Seventh Example Embodiment

This example embodiment provides another solution for avoiding a conflict between establishment of a new PDU session and release of an existing PDU session. The configuration example of a cellular network according to this example embodiment may be similar to the example shown in Fig. 1.

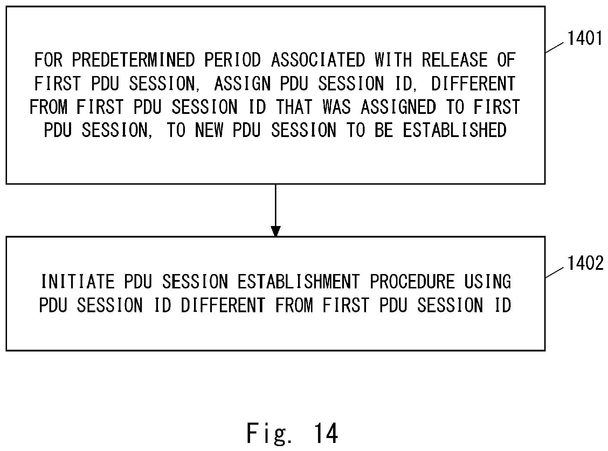

Fig. 14 is a flowchart showing one example of the operations of the UE 1 according to this example embodiment. In Step 1401, for a predetermined period associated with release of a first PDU session, the UE 1 assigns to a new PDU session to be established a different PDU Session ID from the first PDU Session ID that was assigned to the first PDU session. In Step 1402, the UE 1 initiates a PDU session establishment procedure using the PDU Session ID determined in Step 1401.

The above-described predetermined period may be specified in the 3GPP specifications. Additionally or alternatively, the UE 1 may configure the predetermined period based on internally configured data of the UE 1 (UE Local configuration). Additionally or alternatively, the AMF 2 or the SMF 3 may set the predetermined period in the UE 1. The predetermined period may be, for example, a few seconds, Specifically 2 to 3 seconds.

When a timer for message retransmission (e.g., T3580) has already been running in the UE 1, the UE 1 may stop this timer, set a timer value based on the internally configured data of the UE 1 (UE Local configuration) in this timer, and restart this timer. Alternatively, when the timer for message retransmission (e.g., T3580) has already been running in the UE 1, the UE 1 may stop this timer, set a timer value based on internally configured data of the UE 1 (UE Local configuration) in a different timer from the timer for message retransmission, and start the different timer.

In some implementations, the UE 1 may operate to not assign the first PDU Session ID to a new PDU session to be established, for the predetermined period, in response to receiving a PDU Session Release Command message sent from the SMF 3 to the UE 1 to indicate release of the first PDU session.

In other implementations, the UE 1 may operate to not assign the first PDU Session ID to a new PDU session to be established, for the predetermined period, in response to releasing the first PDU session in the UE 1 based on the reception of a PDU Session Release Command message from the SMF 3.

In other implementations, the UE 1 may operate to not assign the first PDU Session ID to a new PDU session to be established, for the predetermined period, in response to sending of a PDU Session Release Complete message to acknowledge (or accept) a PDU Session Release Command message from the SMF 3.

In other implementations, the UE 1 may operate to start a timer in response to release of the first PDU session and not assign the first PDU Session ID to a new PDU session to be established until the timer expires.

As can be understood from the above description, in this example embodiment, the UE 1 does not assign the PDU Session ID of a PDU session to be released to a new PDU session for a predetermined period. Accordingly, this example embodiment can contribute to avoiding a conflict (interference, collision, or PDU Session ID duplicated) between an uncompleted PDU session release and a new PDU session establishment that are associated with the same PDU Session ID.

### Eighth Example Embodiment

This example embodiment provides another solution for avoiding a conflict between establishment of a new PDU session and release of an existing PDU session. The configuration example of a cellular network according to this example embodiment may be similar to the example shown in Fig. 1.

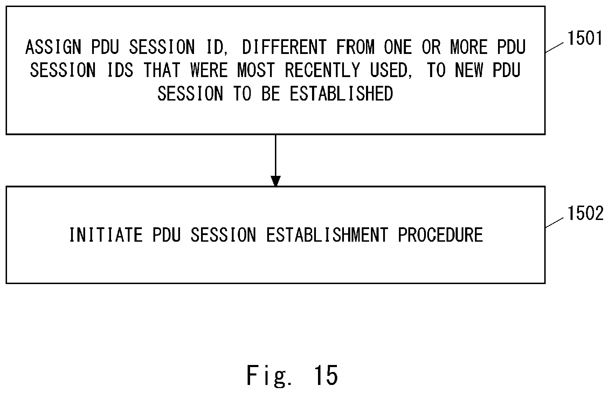

Fig. 15 is a flowchart showing one example of the operations of the UE 1 according to this example embodiment. In Step 1501, the UE 1 assigns to a new PDU session to be established a PDU Session ID different from one or more PDU Session IDs that were most recently used. In Step 1502, the UE 1 initiates a PDU session establishment procedure using the PDU Session ID determined in Step 1501.

In some implementations, the UE 1 may change the value of the PDU Session ID every time a new PDU session is established. More specifically, the UE 1 may have a plurality of candidate values for PDU Session IDs and increment the value of the PDU Session ID assigned to a new PDU session in sequence. If the number of candidate values for PDU Session IDs is sufficiently large, the UE 1 can assign a newly established PDU session a PDU Session ID different from one or more PDU Session IDs that were just used.

According to this example embodiment, it is possible to prevent the PDU Session ID of a PDU session to be released from being used immediately for a new PDU session. Accordingly, this example embodiment can contribute to avoiding a conflict (interference, collision, or PDU Session ID duplicated) between an uncompleted PDU session release and a new PDU session establishment that are associated with the same PDU Session ID.

### Ninth Example embodiment

This example embodiment provides another solution for avoiding a conflict between establishment of a new PDU session and release of an existing PDU session. The configuration example of a cellular network according to this example embodiment may be similar to the example shown in Fig. 1.

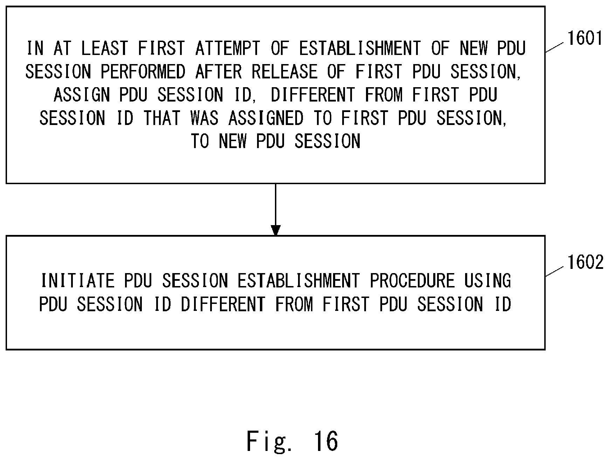

Fig. 16 is a flowchart showing one example of the operations of the UE 1 according to this example embodiment. In Step 1601, in at least a first attempt to establish a new PDU session performed after release of a first PDU session, the UE 1 assigns to the new PDU session a PDU Session ID different from the first PDU Session ID that was assigned to the first PDU session. In Step 1602, the UE 1 initiates a PDU session establishment procedure using the PDU Session ID determined in Step 1601.

In some implementations, in at least a first attempt to establish a new PDU session performed after reception of a PDU Session Release Command message sent from the SMF 3 to the UE 1 to indicate release of a first PDU session, the UE 1 assigns to the new PDU session a PDU Session ID different from the first PDU Session ID that was assigned to the first PDU session.

In other implementations, in at least a first attempt to establish a new PDU session performed after a first PDU session is released within the UE 1 based on reception of a PDU Session Release Command message regarding the first PDU session from the SMF 3, the UE 1 assigns to the new PDU session a PDU Session ID different from the first PDU Session ID that was assigned to the first PDU session.

In other implementations, in at least a first attempt to establish a new PDU session performed after sending a PDU Session Release Complete message regarding a first PDU session, the UE 1 assigns to the new PDU session a PDU Session ID different from the first PDU Session ID that was assigned to the first PDU session.

According to this example embodiment, it is possible to prevent the PDU Session ID of a PDU session to be released from being used immediately for a new PDU session. Accordingly, this example embodiment can contribute to avoiding a conflict (interference, collision, or PDU Session ID duplicated) between an uncompleted PDU session release and a new PDU session establishment that are associated with the same PDU Session ID.

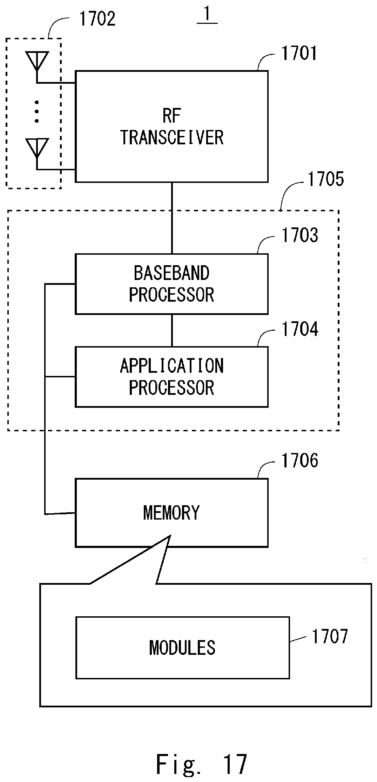

The following provides configuration examples of the UE 1, the AMF 2, and the SMF 3 according to the above example embodiments. Fig. 17 is a block diagram showing a configuration example of the UE 1. A Radio Frequency (RF) transceiver 1701 performs analog RF signal processing to communicate with NG-RAN nodes. The RF transceiver 1701 may include a plurality of transceivers. The analog RF signal processing performed by the RF transceiver 1701 includes frequency up-conversion, frequency down-conversion, and amplification. The RF transceiver 1701 is coupled to an antenna array 1702 and a baseband processor 1703. The RF transceiver 1701 receives modulated symbol data (or OFDM symbol data) from the baseband processor 1703, generates a transmission RF signal, and supplies the transmission RF signal to the antenna array 1702. Further, the RF transceiver 1701 generates a baseband reception signal based on a reception RF signal received by the antenna array 1702, and supplies the baseband reception signal to the baseband processor 1703. The RF transceiver 1701 may include an analog beamformer circuit for beam forming. The analog beamformer circuit includes, for example, a plurality of phase shifters and a plurality of power amplifiers.

The baseband processor 1703 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1703 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1703 may include processing of a Non-Access Stratum (NAS) protocol, a Radio Resource Control (RRC) protocol, and MAC Control Elements (CEs).

The baseband processor 1703 may perform Multiple Input Multiple Output (MIMO) encoding and pre-coding for beam forming.

The baseband processor 1703 may include a modem processor (e.g., a Digital Signal Processor (DSP) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1704 described in the following.

The application processor 1704 is also referred to as a CPU, an MPU, a microprocessor, or a processor core. The application processor 1704 may include a plurality of processors (processor cores). The application processor 1704 loads a system software program (Operating System (OS)) and various application programs (e.g., a call application, a WEB browser, a mailer, a camera operation application, and a music player application) from a memory 1706 or from another memory (not shown) and executes these programs, thereby providing various functions of the UE 1.

In some implementations, as represented by a dashed line (1705) in Fig. 17, the baseband processor 1703 and the application processor 1704 may be integrated on a single chip. In other words, the baseband processor 1703 and the application processor 1704 may be implemented in a single System on Chip (SoC) device 1705. An SoC device may be referred to as a system Large Scale integration (LSI) or a chipset.

The memory 1706 is a volatile memory, a non-volatile memory, or a combination thereof. The memory 1706 may include a plurality of memory devices that are physically independent from each other. The volatile memory is, for example, a Static Random Access Memory (SRAM), a Dynamic RAM (DRAM), or any combination thereof. The non-volatile memory is a mask Read Only Memory (MROM), an Electrically Erasable Programmable ROM (EEPROM), a flash memory, a hard disc drive, or any combination thereof. The memory 1706 may include, for example, an external memory device that can be accessed from the baseband processor 1703, the application processor 1704, and the SoC 1705. The memory 1706 may include an internal memory device that is integrated in the baseband processor 1703, the application processor 1704, or the SoC 1705. Further, the memory 1706 may include a memory in a Universal Integrated Circuit Card (UICC).

The memory 1706 may store one or more software modules (computer programs) 1707 including instructions and data to perform the processing by the UE 1 described in the above example embodiments. In some implementations, the baseband processor 1703 or the application processor 1704 may be configured to load these software modules 1707 from the memory 1706 and execute the loaded software modules, thereby performing the processing of the UE 1 described in the above example embodiments with reference to the drawings.

Note that the control plane processes and operations described in the above example embodiments and performed by the UE 1 can be achieved by the elements other than the RF transceiver 1701 and the antenna array 1702, i.e., achieved by the memory 1706 storing the software modules 1707 and at least one of the baseband processor 1703 and the application processor 1704.

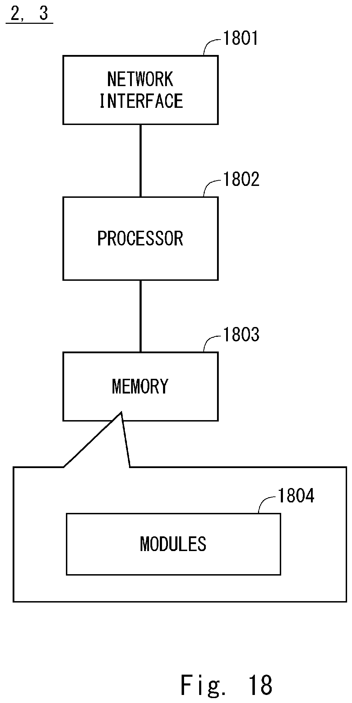

Fig. 18 shows a configuration example of the AMF 2. The SMF 3 may also be configured as shown in Fig. 18. As shown in Fig. 18, the AMF 2 includes a network interface 1801, a processor 1802, and a memory 1803. The network interface 1801 is used, for example, to communicate with RAN nodes, and to communicate with other network functions (NFs) or nodes in the 5GC. The other NFs or nodes in the 5GC include, for example, a UDM, an SMF, and a PCF. The network interface 1801 may include, for example, a network interface card (NIC) conforming to the IEEE 802.3 series.

The processor 1802 may include, for example, a microprocessor, a Micro Processing Unit (MPU), or a Central Processing Unit (CPU). The processor 1802 may include a plurality of processors.

The memory 1803 is composed of a combination of a volatile memory and a non-volatile memory. The memory 1803 may include a plurality of memory devices that are physically independent from each other. The volatile memory is, for example, a Static Random Access Memory (SRAM), a Dynamic RAM (DRAM), or any combination thereof. The non-volatile memory is, for example, a mask Read Only Memory (MROM), an Electrically Erasable Programmable ROM (EEPROM), a flash memory, a hard disc drive, or any combination thereof. The memory 1803 may include a storage located apart from the processor 1802. In this case, the processor 1802 may access the memory 1803 via the network interface 1801 or an I/O interface (not shown).

The memory 1803 may store one or more software modules (computer programs) 1804 including instructions and data to perform processing by the AMF 2 described in the above example embodiments. In some implementations, the processor 1802 may be configured to load the software modules 1804 from the memory 1803 and execute the loaded software modules, thereby performing the processing of the AMF 2 described in the above example embodiments.

Further, the above-described example embodiments are merely examples of applications of the technical ideas obtained by the inventor. These technical ideas are not limited to the above-described example embodiments and various modifications can be made thereto.

For example, the whole or part of the above example embodiments can be described as, but not limited to, the following supplementary notes.

### (Supplementary Note A1)

An Access and Mobility Management Function (AMF) node comprising:
at least one memory; and
at least one processor coupled to the at least one memory, wherein
the at least one processor is configured to, in response to receiving a first control message containing a first Session Management (SM) container from a Session Management Function (SMF), send a first Non-Access Stratum (NAS) message containing the first SM container to a radio terminal,
the first SM container contains a Protocol Data Unit (PDU) Session Release Command message sent from the SMF to the radio terminal in order to indicate release of a first PDU session associated with a first PDU Session ID, and
the at least one processor is configured to, after sending the first NAS message to the radio terminal, send to the radio terminal a second NAS message to indicate that the first PDU Session ID can be assigned to another PDU session different from the first PDU session.

### (Supplementary Note A2)

The AMF node according to Supplementary Note A1, wherein the at least one processor is configured to send the second NAS message to the radio terminal in response to receiving from the SMF a second control message notifying the AMF node that a Session Management (SM) context for the first PDU session is to be released.

### (Supplementary Note A3)

The AMF node according to Supplementary Note A2, wherein the at least one processor is configured to release a PDU session level context that is related to the first PDU session and is managed by the AMF node in response to reception of the second control message.

### (Supplementary Note A4)

The AMF node according to Supplementary Note A2, wherein the PDU session level context includes an association between the first PDU Session ID and SMF information indicating the SMF.

### (Supplementary Note A5)

The AMF node according to any one of Supplementary Notes A2 to A4, wherein
the at least one processor is configured to receive a third NAS message containing a second SM container from the radio terminal after sending the first NAS message to the radio terminal and before receiving the second control message from the SMF,
the second SM container contains a PDU Session Release Complete message sent from the radio terminal to the SMF in order to respond to the PDU Session Release Command message, and
the at least one processor is configured to send the second SM container to the SMF.

### (Supplementary Note A6)

The AMF node according to Supplementary Note A1, wherein
the at least one processor is configured to send the second NAS message to the radio terminal in response to receiving from the SMF a third control message containing a third SM container, and
the second NAS message contains the third SM container.

### (Supplementary Note A7)

The AMF node according to Supplementary Note A6, wherein the third SM container contains a message sent from the SMF to the radio terminal to notify the radio terminal that a Session Management (SM) context for the first PDU session is to be released.

### (Supplementary Note A8)

The AMF node according to any one of Supplementary Notes A1 to A7, wherein the second NAS message notifies the radio terminal that the SM context for the first PDU session has been successfully released in a core network.

### (Supplementary Note A9)

The AMF node according to any one of Supplementary Notes A1 to A8, wherein the second NAS message allows the radio terminal to assign the first PDU Session ID to a new PDU session different from the first PDU session.

### (Supplementary Note A10)

The AMF node according to any one of Supplementary Notes A1 to A9, wherein the at least one processor is configured to receive, from the radio terminal, capability information indicating that the radio terminal has a capability of handling a PDU Session release procedure involving sending and receiving of the second NAS message.

### (Supplementary Note A11)

The AMF node according to Supplementary Note A10, wherein the at least one processor is configured to receive the capability information from the radio terminal in a registration procedure of the radio terminal.

### (Supplementary Note A12)

The AMF node according to Supplementary Note A10 or A11, wherein the at least one processor is configured to determine whether to use the PDU Session release procedure, involving sending and receiving of the second NAS message, for the radio terminal depending on whether the at least one processor has received the capability information.

### (Supplementary Note A13)

A radio terminal comprising:
at least one memory; and
at least one processor coupled to the at least one memory, wherein
the at least one processor is configured to receive from an Access and Mobility Management Function (AMF) a first Non-Access Stratum (NAS) message containing a first Session Management (SM) container,
the first SM container contains a Protocol Data Unit (PDU) Session Release Command message sent from a Session Management Function (SMF) to the radio terminal in order to indicate release of a first PDU session associated with a first PDU Session ID, and
the at least one processor is configured to, after receiving the first NAS message, receive from the AMF a second NAS message indicating that the first PDU Session ID can be assigned to another PDU session different from the first PDU session.

### (Supplementary Note A14)

The radio terminal according to Supplementary Note A13, wherein the second NAS message notifies the radio terminal that the SM context for the first PDU session has been successfully released in a core network.

### (Supplementary Note A15)

The radio terminal according to Supplementary Note A13 or A14, wherein
the at least one processor is configured to send a third NAS message containing a second SM container to the AMF after receiving the first NAS message and before receiving the second NAS message, and
the second SM container contains a PDU Session Release Complete message sent from the radio terminal to the SMF in order to respond to the PDU Session Release Command message.

### (Supplementary Note A16)

The radio terminal according to any one of Supplementary Notes A13 to A15, wherein the at least one processor is configured to recognize in response to the reception of the second NAS message that the first PDU Session ID can be assigned to a new PDU session different from the first PDU session.

### (Supplementary Note A17)

The radio terminal according to any one of Supplementary Notes A13 to A16, wherein the second NAS message allows the radio terminal to assign the first PDU Session ID to a new PDU session different from the first PDU session.

### (Supplementary Note A18)

The radio terminal according to any one of Supplementary Notes A13 to A17, wherein the at least one processor is configured to not assign the first PDU Session ID to a new PDU session to be established at least until the at least one processor receives the second NAS message.

### (Supplementary Note A19)

The radio terminal according to any one of Supplementary Notes A13 to A18, wherein the at least one processor is configured to send, to the AMF, capability information indicating that the radio terminal has a capability of handling a PDU Session release procedure involving sending and receiving of the second NAS message.

### (Supplementary Note A20)

The radio terminal according to Supplementary Note A19, wherein the at least one processor is configured to send the capability information to the AMF in a registration procedure of the radio terminal.

### (Supplementary Note A21)

A method for an Access and Mobility Management Function (AMF) node, the method comprising:
in response to receiving a first control message containing a first Session Management (SM) container from a Session Management Function (SMF), sending a first Non-Access Stratum (NAS) message containing the first SM container to a radio terminal, the first SM container containing a Protocol Data Unit (PDU) Session Release Command message sent from the SMF to the radio terminal in order to indicate release of a first PDU session associated with a first PDU Session ID; and
after sending the first NAS message to the radio terminal, sending to the radio terminal a second NAS message to indicate that the first PDU Session ID can be assigned to another PDU session different from the first PDU session.

### (Supplementary Note A22)

A method for a radio terminal, the method comprising:
receiving from an Access and Mobility Management Function (AMF) a first Non-Access Stratum (NAS) message containing a first Session Management (SM) container, the first SM container containing a Protocol Data Unit (PDU) Session Release Command message sent from a Session Management Function (SMF) to the radio terminal in order to indicate release of a first PDU session associated with a first PDU Session ID; and
after receiving the first NAS message, receiving from the AMF a second NAS message indicating that the first PDU Session ID can be assigned to another PDU session different from the first PDU session.

### (Supplementary Note A23)

A program for causing a computer to perform a method for an Access and Mobility Management Function (AMF) node, wherein the method comprises:
in response to receiving a first control message containing a first Session Management (SM) container from a Session Management Function (SMF), sending a first Non-Access Stratum (NAS) message containing the first SM container to a radio terminal, the first SM container containing a Protocol Data Unit (PDU) Session Release Command message sent from the SMF to the radio terminal in order to indicate release of a first PDU session associated with a first PDU Session ID; and
after sending the first NAS message to the radio terminal, sending to the radio terminal a second NAS message to indicate that the first PDU Session ID can be assigned to another PDU session different from the first PDU session.

### (Supplementary Note A24)

A program for causing a computer to perform a method for a radio terminal, wherein the method comprises:
receiving from an Access and Mobility Management Function (AMF) a first Non-Access Stratum (NAS) message containing a first Session Management (SM) container, the first SM container containing a Protocol Data Unit (PDU) Session Release Command message sent from a Session Management Function (SMF) to the radio terminal in order to indicate release of a first PDU session associated with a first PDU Session ID; and
after receiving the first NAS message, receiving from the AMF a second NAS message indicating that the first PDU Session ID can be assigned to another PDU session different from the first PDU session.

### (Supplementary Note B1)

An Access and Mobility Management Function (AMF) node comprising:
at least one memory; and
at least one processor coupled to the at least one memory and configured to:
   determine whether a new Protocol Data Unit (PDU) Session ID associated with a new PDU session requested from a radio terminal is the same as a first PDU Session ID associated with an existing first PDU session that has not been successfully released; and
   if the new PDU Session ID is the same as the first PDU Session ID, perform a procedure for avoiding a conflict between establishment of the new PDU session and release of the first PDU session.

### (Supplementary Note B2)

The AMF node according to Supplementary Note B1, wherein the at least one processor is configured to, in the procedure, suspend establishment of the new PDU session until release of the first PDU session is completed.

### (Supplementary Note B3)

The AMF node according to Supplementary Note B2, wherein the at least one processor is configured to refrain from sending a Non-Access Stratum (NAS) message for establishment of the new PDU session to a Session Management Function (SMF) in order to suspend establishment of the new PDU session.

### (Supplementary Note B4)

The AMF node according to Supplementary Note B1, wherein the at least one processor is configured to, in the procedure, send a NAS message indicating rejection of establishment of the new PDU session to the radio terminal, without sending a Non-Access Stratum (NAS) message for establishment of the new PDU session to a Session Management Function (SMF).

### (Supplementary Note B5)

The AMF node according to Supplementary Note B4, wherein
the NAS message is a PDU Session Establishment Reject message, and
the at least one processor is configured to generate the PDU Session Establishment Reject message.

### (Supplementary Note B6)

The AMF node according to Supplementary Note B5, wherein the PDU Session Establishment Reject message indicates a cause indicating that PDU session establishment is temporarily rejected, and indicates a back-off timer value.

### (Supplementary Note B7)

The AMF node according to Supplementary Note B1, wherein the at least one processor is configured to, in the procedure, send an indication of a PDU Session ID conflict to a Session Management Function (SMF) when sending a Non-Access Stratum (NAS) message for establishment of the new PDU session to the SMF.

### (Supplementary Note B8)

The AMF node according to Supplementary Note B7, wherein the at least one processor is configured to send the NAS message to the SMF with the indication of the PDU Session ID conflict.

### (Supplementary Note B9)

The AMF node according to Supplementary Note B7 or B8, wherein
the at least one processor is configured to receive a PDU Session Establishment Reject message from the SMF and send the PDU Session Establishment Reject message to the radio terminal, and
the PDU Session Establishment Reject message indicates a cause indicating that PDU session establishment is temporarily rejected, and indicates a back-off timer value.

### (Supplementary Note B10)

The AMF node according to Supplementary Note B1, wherein the at least one processor is configured to, in the procedure, discard a Non-Access Stratum (NAS) message for establishment of the new PDU session at the AMF node without sending the NAS message to a Session Management Function (SMF).

### (Supplementary Note B11)

A method for an Access and Mobility Management Function (AMF) node, the method comprising:
determining whether a new Protocol Data Unit (PDU) Session ID associated with a new PDU session requested from a radio terminal is the same as a first PDU Session ID associated with an existing first PDU session that has not been successfully released, and
if the new PDU Session ID is the same as the first PDU Session ID, performing a procedure for avoiding a conflict between establishment of the new PDU session and release of the first PDU session.

### (Supplementary Note B12)

A program for causing a computer to perform a method for an Access and Mobility Management Function (AMF) node, wherein the method comprises:
determining whether a new Protocol Data Unit (PDU) Session ID associated with a new PDU session requested from a radio terminal is the same as a first PDU Session ID associated with an existing first PDU session that has not been successfully released, and
if the new PDU Session ID is the same as the first PDU Session ID, performing a procedure for avoiding a conflict between establishment of the new PDU session and release of the first PDU session.

### (Supplementary Note B13)

A Session Management Function (SMF) node comprising:
at least one memory; and
at least one processor coupled to the at least one memory and configured to:
   receive a first NAS message for establishment of a new Protocol Data Unit (PDU) session from a radio terminal via an Access and Mobility Management Function (AMF); and
   if a new PDU Session ID associated with the new PDU session is the same as a first PDU Session ID associated with an existing first PDU session that has not been successfully released, send a second NAS message indicating rejection of establishment of the new PDU session to the radio terminal via the AMF.

### (Supplementary Note B14)

The SMF node according to Supplementary Note B13, wherein the at least one processor is configured to send the second NAS message to the radio terminal via the AMF in response to receiving an indication of a PDU Session ID conflict from the AMF along with the first NAS message.

### (Supplementary Note B15)

The SMF node according to Supplementary Note B13 or B14, wherein the second NAS message indicates a cause indicating that PDU session establishment is temporarily rejected, and indicates a back-off timer value.

### (Supplementary Note B16)

A method for a Session Management Function (SMF) node, the method comprising:
receiving a first NAS message for establishment of a new Protocol Data Unit (PDU) session from a radio terminal via an Access and Mobility Management Function (AMF); and
if a new PDU Session ID associated with the new PDU session is the same as a first PDU Session ID associated with an existing first PDU session that has not been successfully released, sending a second NAS message indicating rejection of establishment of the new PDU session to the radio terminal via the AMF.

### (Supplementary Note B17)

A program for causing a computer to perform a method for a Session Management Function (SMF) node, wherein the method comprises:
receiving a first NAS message for establishment of a new Protocol Data Unit (PDU) session from a radio terminal via an Access and Mobility Management Function (AMF); and
if a new PDU Session ID associated with the new PDU session is the same as a first PDU Session ID associated with an existing first PDU session that has not been successfully released, sending a second NAS message indicating rejection of establishment of the new PDU session to the radio terminal via the AMF.

### (Supplementary Note C1)

A radio terminal comprising:
at least one memory; and
at least one processor coupled to the at least one memory and configured to:
   for a first period associated with release of a first Protocol Data Unit (PDU) session, assign to a new PDU session to be established a PDU Session ID different from a first PDU Session ID that was assigned to the first PDU session.

### (Supplementary Note C2)

The radio terminal according to Supplementary Note C1, wherein the at least one processor is configured to, in response to receiving a PDU session Release Command message sent from a Session Management Function (SMF) to the radio terminal in order to indicate the release of the first PDU session, not assign the first PDU Session ID to a new PDU session to be established, during the first period.

### (Supplementary Note C3)

The radio terminal according to Supplementary Note C1, wherein the at least one processor is configured to, in response to releasing the first PDU session based on reception of a PDU Session Release Command message from a Session Management Function (SMF), not assign the first PDU Session ID to a new PDU session to be established, during the first period.

### (Supplementary Note C4)

The radio terminal according to Supplementary Note C1, wherein the at least one processor is configured to, in response to sending a PDU Session Release Complete message to acknowledge a PDU Session Release Command message from a Session Management Function (SMF), not assign the first PDU Session ID to a new PDU session to be established, during the first period.

### (Supplementary Note C5)

The radio terminal according to Supplementary Note C1, wherein the at least one processor is configured to start a timer in response to release of the first PDU session and not assign the first PDU Session ID to a new PDU session to be established until the timer expires.

### (Supplementary Note C6)

The radio terminal according to Supplementary Note C1, wherein the at least one processor is configured to be set with a value of the first period.

### (Supplementary Note C7)

A method for a radio terminal, the method comprising:
for a first period associated with release of a first Protocol Data Unit (PDU) session, assigning to a new PDU session to be established a PDU Session ID different from a first PDU Session ID that was assigned to the first PDU session; and
initiating a PDU session establishment procedure using the different PDU Session ID.

### (Supplementary Note C8)

A radio terminal comprising:
at least one memory; and
at least one processor coupled to the at least one memory and configured to:
   assign a Protocol Data Unit (PDU) Session ID that is different from most recently used one or more PDU Session IDs to a new PDU session to be established.

### (Supplementary Note C9)

A method for a radio terminal, the method comprising:
assigning a Protocol Data Unit (PDU) Session ID that is different from most recently used one or more PDU Session IDs to a new PDU session to be established; and
initiating a PDU session establishment procedure using the different PDU Session ID.

### (Supplementary Note C10)

A radio terminal comprising:
at least one memory; and
at least one processor coupled to the at least one memory and configured to:
   in at least a first attempt to establish a new Protocol Data Unit (PDU) session performed after release of a first PDU session, assign to the new PDU session a PDU Session ID different from a first PDU Session ID that was assigned to the first PDU session.

### (Supplementary Note C11)

A method for a radio terminal, the method comprising:
in at least a first attempt to establish a new Protocol Data Unit (PDU) session performed after release of a first PDU session, assigning to the new PDU session a PDU Session ID different from a first PDU Session ID that was assigned to the first PDU session; and
initiating a PDU session establishment procedure using the different PDU Session ID.

This application is based upon and claims the benefit of priority from Japanese Patent Application No. 2019-199274, filed on October 31, 2019, the disclosure of which is incorporated herein in its entirety by reference.

### Reference Signs List

- 1: UE
- 2: AMF
- 3: SMF
- 4: AN
- 5: UPF
- 6: DN
- 1703: Baseband Processor
- 1704: Application Processor
- 1706: Memory
- 1707: Modules
- 1802: Processor
- 1803: Memory
- 1804: Modules

## Claims

1. A radio terminal comprising:
at least one memory; and
at least one processor coupled to the at least one memory and configured to:
assign a Protocol Data Unit (PDU) Session ID that is different from a most recently used PDU Session ID to a new PDU session to be established.

2. The radio terminal according to claim 1, wherein a value of the different PDU Session ID is generated by adding an increment to a value of the most recently used PDU Session ID.

3. The radio terminal according to claim 1 or 2, wherein the at least one processor is configured to assign one of a plurality of candidate values for a PDU Session ID to a new PDU session to be established.

4. The radio terminal according to any one of claims 1 to 3, wherein the at least one processor is configured to, each time a new PDU session is established, assign a different PDU Session ID to the new PDU session.

5. The radio terminal according to any one of claims 1 to 4, wherein the at least one processor is configured to assign to a new PDU session to be established a PDU Session ID that is different from most recently used at least one PDU Session ID.

6. The radio terminal according to any one of claims 1 to 5, wherein the at least one processor is configured to, for a first period associated with release of a first PDU session, assign to a new PDU session to be established a PDU Session ID different from a first PDU Session ID that was assigned to the first PDU session.

7. The radio terminal according to claim 6, wherein the at least one processor is configured to, in response to receiving a PDU session Release Command message sent from a Session Management Function (SMF) to the radio terminal in order to indicate the release of the first PDU session, not assign the first PDU Session ID to a new PDU session to be established, during the first period.

8. The radio terminal according to claim 6, wherein the at least one processor is configured to, in response to releasing the first PDU session based on reception of a PDU Session Release Command message from a Session Management Function (SMF), not assign the first PDU Session ID to a new PDU session to be established, during the first period.

9. The radio terminal according to claim 6, wherein the at least one processor is configured to, in response to sending a PDU Session Release Complete message to acknowledge a PDU Session Release Command message from a Session Management Function (SMF), not assign the first PDU Session ID to a new PDU session to be established, during the first period.

10. The radio terminal according to claim 6, wherein the at least one processor is configured to start a timer in response to release of the first PDU session and not assign the first PDU Session ID to a new PDU session to be established until the timer expires.

11. The radio terminal according to claim 6, wherein the at least one processor is configured to be set with a value of the first period.

12. The radio terminal according to any one of claims 1 to 5, wherein the at least one processor is configured to, in at least a first attempt to establish a new PDU session performed after release of a first PDU session, assign to the new PDU session a PDU Session ID different from a first PDU Session ID that was assigned to the first PDU session.

13. A method for a radio terminal, the method comprising:
assigning a Protocol Data Unit (PDU) Session ID that is different from a most recently used PDU Session ID to a new PDU session to be established; and
initiating a PDU session establishment procedure using the different PDU Session ID.

14. The method according to claim 13, wherein a value of the different PDU Session ID is generated by adding an increment to a value of the most recently used PDU Session ID.

15. The method according to claim 13 or 14, wherein the assigning includes assigning one of a plurality of candidate values for a value of a PDU Session ID to a new PDU session to be established.

16. The method according to any one of claims 13 to 15, wherein the assigning includes, each time a new PDU session is established, assigning a different PDU Session ID to the new PDU session.

17. The method according to any one of claims 13 to 16, wherein the assigning includes assigning to a new PDU session to be established a PDU Session ID that is different from most recently used at least one PDU Session ID.

18. The method according to any one of claims 13 to 17,
wherein
the assigning includes, for a first period associated with release of a first PDU session, assigning to a new PDU session to be established a PDU Session ID different from a first PDU Session ID that was assigned to the first PDU session; and
the initiating includes initiating a PDU session establishment procedure using the different PDU Session ID.

19. The method according to claim 18, wherein the assigning includes, in response to receiving a PDU session Release Command message sent from a Session Management Function (SMF) to the radio terminal in order to indicate the release of the first PDU session, not assigning the first PDU Session ID to a new PDU session to be established, during the first period.

20. The method according to claim 18, wherein the assigning includes, in response to releasing the first PDU session based on reception of a PDU Session Release Command message from a Session Management Function (SMF), not assigning the first PDU Session ID to a new PDU session to be established, during the first period.

21. The method according to claim 18, wherein the assigning includes, in response to sending a PDU Session Release Complete message to acknowledge a PDU Session Release Command message from a Session Management Function (SMF), not assigning the first PDU Session ID to a new PDU session to be established, during the first period.

22. The method according to claim 18, wherein the assigning includes starting a timer in response to release of the first PDU session and not assigning the first PDU Session ID to a new PDU session to be established until the timer expires.

23. The method according to any one of claims 13 to 17,
wherein
the assigning includes, in at least a first attempt to establish a new PDU session performed after release of a first PDU session, assigning to the new PDU session a PDU Session ID different from a first PDU Session ID that was assigned to the first PDU session, and
the initiating includes initiating a PDU session establishment procedure using the different PDU Session ID.
